# EUROPEAN PATENT SPECIFICATION

(11) **EP 3 615 309 B1**
(45) Date of publication and mention of the grant of the patent: **12.04.2023**
(21) Application number: 17919457.6
(22) Date of filing: 28.07.2017
(51) Int. Cl.: B29C 64/314, B29C 64/321, B33Y 30/00, B33Y 40/00, B29C 64/357, B22F 12/50, B33Y 50/02, B22F 12/90, B22F 12/58, B22F 12/57, B22F 12/55, B22F 12/52, B22F 10/85, B22F 10/77, B22F 10/73, B22F 10/28, B29C 64/153, B29C 64/165

(54) **THREE-DIMENSIONAL PRINTER WITH FEEDERS**
DREIDIMENSIONALER DRUCKER MIT VORSCHÜBEN
IMPRIMANTE TRIDIMENSIONNELLE AVEC DISPOSITIFS D'ALIMENTATION

(43) Date of publication of application: 04.03.2020
(73) Proprietor: Hewlett-Packard Development Company, L.P., Spring, TX 77389 (US)
(72) Inventor: SWIER, Kevin, E., Corvallis, OR 97330-4239 (US); OTIS, JR., David, R., Corvallis, OR 97330-4239 (US)
(74) Representative: EIP
(86) International application number: PCT/US2017/044355
(87) International publication number: WO 2019/022762

(56) References cited:
- WO-A1-2016/125170
- WO-A1-2018/022046
- KR-A- 20160 003 907
- US-A- 5 121 329
- US-A1- 2013 328 228
- US-B1- 6 405 095

## Description

### BACKGROUND

Three-dimensional (3D) printing may produce a 3D object. In particular, a 3D printer may add successive layers of build material, such as powder, to a build platform. The 3D printer may selectively solidify portions of each layer under computer control to produce the 3D object. The material may be powder, or powder-like material, including metal, plastic, composite material, and other powders. The objects formed can be various shapes and geometries, and produced via a model such as a 3D model or other electronic data source. The fabrication may involve laser melting, laser sintering, heat sintering, electron beam melting, thermal fusion, and so on. The model and automated control may facilitate the layered manufacturing and additive fabrication. The 3D printed objects may be intermediate or end-use products, as well as prototypes. Product applications may include aerospace parts, machine parts, medical devices (e.g., implants), automobile parts, fashion products, structural and conductive metals, ceramics, and other applications.

US6405095 discloses a solid freeform fabrication system having a compressed air conveyance system.

### DESCRIPTION OF THE DRAWINGS

Certain examples are described in the following detailed description and in reference to the drawings, in which:
Fig. 1 is a block diagram of a 3D printer in accordance with examples of the present techniques;
Fig. 2 is a block diagram of a 3D printer in accordance with examples of the present techniques;
Fig. 3 is a block diagram of a 3D printer in accordance with examples of the present techniques;
Fig. 4 is a block diagram of a material supply system of a 3D printer in accordance with examples of the present techniques;
Fig. 5 is a block flow diagram of a method of operating a 3D printer in accordance with examples of the present techniques;
Fig. 6 is a block flow diagram of a method of operating a 3D printer in accordance with examples of the present techniques;
Fig. 7 is a block flow diagram of a computing device in accordance with examples of the present techniques;
Fig. 8 is a block diagram of a computer-readable medium that may contain code to execute operation of a 3D printer in accordance with examples of the present techniques;
Fig. 9 is a perspective view of a rotary feeder of a 3D printer in accordance with examples of the present techniques;
Fig. 10 is a diagram of a 3D printer in accordance with examples of the present techniques;
Fig. 11 is a diagram of a 3D printer in accordance with examples of the present techniques;
Fig. 12 is a diagram of a 3D printer in accordance with examples of the present techniques;
Fig. 13 is a diagram of a 3D printer in accordance with examples of the present techniques;
Fig. 14 is a perspective view of a 3D printer in accordance with examples of the present techniques; and
Fig. 15 is a perspective view of a 3D printer in accordance with examples of the present techniques.

### DETAILED DESCRIPTION

Three dimensional printers may form 3D objects from build material such as powder. The cost of a 3D printer producing 3D objects may be related to the cost of the build material. Thus, there may be a desire for 3D printers to utilize recycle material as build material. Yet, for some applications, there may be benefit in utilizing new material because of reasons such as product purity, strength, and finish in certain instances. To mix recycle material and new material as build material for some 3D printers, a user may employ extra floor space and equipment external to the 3D printer. A user may also rely on peripheral resources in the extraction of printed 3D objects from a 3D printer. Increased costs may result from dedicated resources external to the printer for mixing of build material and for extraction. Further, manual handling of build material in mixing, addition, and extraction may result in cross-contamination of build material with the environment.

Certain examples of the present techniques provide a 3D printer having internal or integrated handling of the build material and, therefore, reduce manual handling of build material and associated cross-contamination of the build material with the environment. Indeed, examples herein may include 3D printers that provide contained handling to mix recycle material and new material as the build material. Example 3D printers herein may also provide for contained handling in the recovery of excess or unfused build material in the extraction of the printed 3D object, and so on. The printer integrated conveying system(s) internal within the printer may include, for instance, a closed-loop or substantially closed-loop material handling system for transporting material internally within the 3D printer. Certain examples may generally not employ external dedicated resources, extensive floor space separate from the printer, or external equipment to mix powder or extract 3D objects from unfused powder. The technique may include mixing of fresh and recycle build material during pneumatic transport.

A 3D printer having a conveying system to transport build material, such as powder, for the printer to form a 3D object from the build material. The conveying system may be internal within the 3D printer. The build material may include a first material and a second material at a specified ratio. The conveying system is a dilute-phase pneumatic conveying system that promotes mixing of the first material and the second material in-line via the relatively high velocity transport. In examples, the first material is new material and the second material is recycled or recycle material. The 3D printer includes a first material vessel that stores or holds first material. Likewise, the 3D printer includes a second material vessel that stores or holds second material. The first material vessel and the second material vessel may be internal within the 3D printer.

In operation, the first material vessel discharges first material through a first feeder to the conveying system. The second material vessel discharges second material through a second feeder to the conveying system. At least one sensor provides indication of material discharge rate from the first material vessel or the second material vessel, or both. The 3D printer has a controller to adjust, in response to the indication of material discharge rate, a first operating parameter of the first feeder and/or a second operating parameter of the second feeder to maintain the specified ratio of the first material to the second material. The first operating parameter and the second operating parameter may each be, for example, revolutions per minute (rpm) or other operating parameter of the feeder. Moreover, as indicated, multiple sensors may be employed. For example, a first sensor and a second sensor may provide the indication of material discharge rate from the first material vessel and the second material vessel, respectively. Further, a sensor associated with the conveying system may provide the indication, for example, of the combined material discharge rate from the first material vessel and the second material vessel.

In addition, the 3D printer may include an internal dispense vessel to supply build material for the 3D printer to form the 3D object. In some instances, the internal conveying system may provide the first material and second material, respectively, from the first material vessel and the second material vessel to the dispense vessel. In certain instances, the conveying system may transport and mix in-line the first material and the second material as build material to the dispense vessel. In one instance, the conveying system transports the first material and the second material to the dispense vessel during the print job, e.g., during formation of the 3D object.

Thus, examples may provide for internal mixing of new powder and recycle powder during the print job. Mixing occurs in the dilute-phase pneumatic transport of powder. The mix ratios may be checked with sensors such as load cells on material vessels or hoppers. Feeders at the discharge of material vessels may regulate, modulate, or meter the build material powder. Again, the ratio of first material to second material, and the overall rate of first material and second material, may be checked by, for example, the vessel load-cell feedback. Moreover, mixing uniformity via the conveying system may be with a scale of scrutiny of approximately 10 cubic centimeters (cc) or greater. In certain examples, a micro-aerator (or "puffer") at the base of a dispense vessel or hopper that receives the first material and the second material may further assist mixing. In some examples, no extra process step or mechanism in addition to the in-line transport and micro-aerator is employed for mixing the two powders. In other examples, additional mixing equipment or actions may be employed.

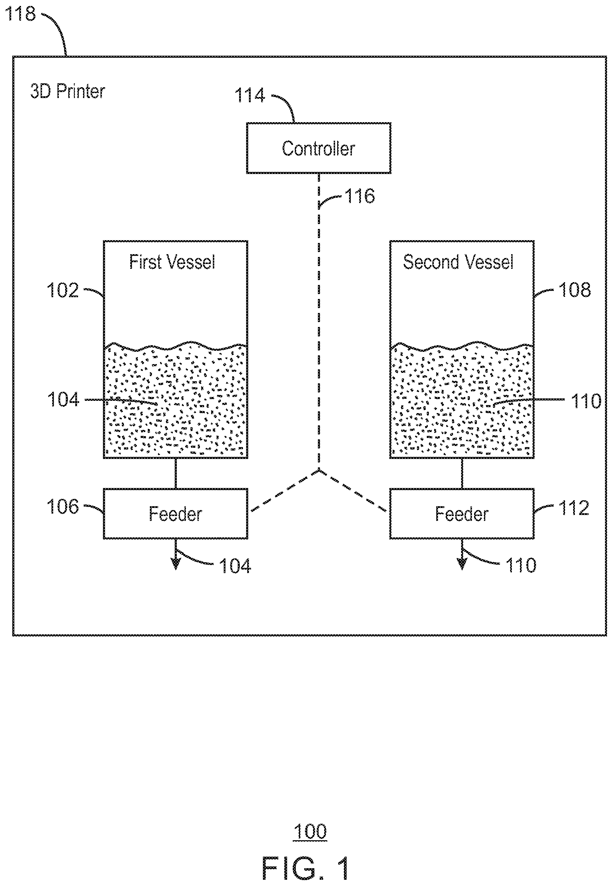

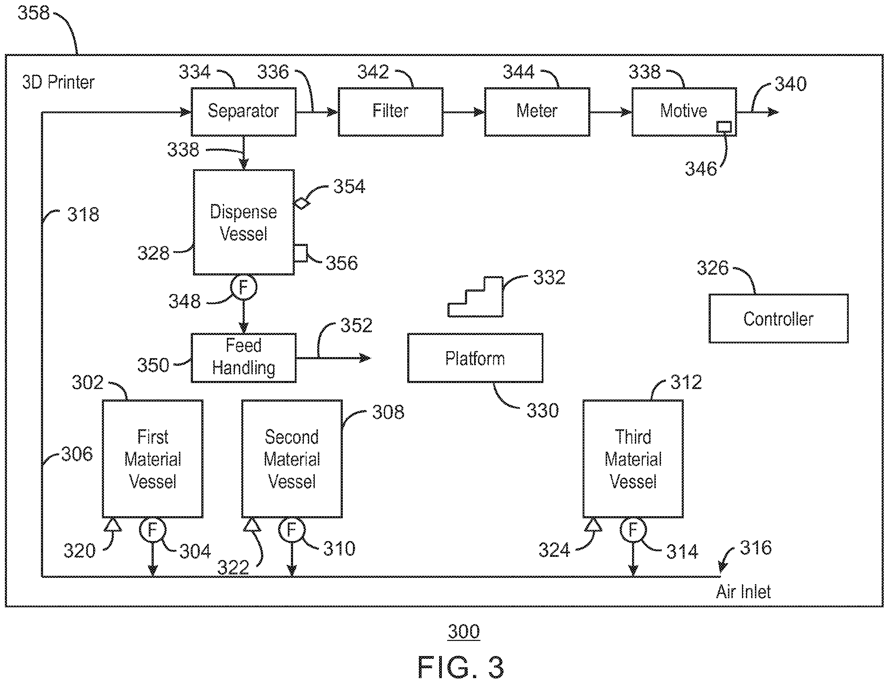

Fig. 1 is a diagram showing a portion of 3D printer 100 that forms a 3D object from build material. The 3D printing may include selective layer sintering (SLS), selective heat sintering (SHS), electron beam melting (EBM), thermal fusion and fusing agent, or other 3D printing and AM technologies to generate the 3D object from the build material. The build material may be powder, powder-like, or in powder form. The build material may be different materials including polymers, plastics, metals, ceramics, and so on. Also, the printer 300 components depicted in Fig. 3 may be integrated internal within the printer 300, such as within a housing 358 of the printer 300.

The printer 100 in this example has an internal first material vessel 102 to discharge first material 104 through a first feeder 106 as build material. The printer 100 has an internal second material vessel 108 to discharge second material 110 through a second feeder 112 as build material. The first material may be different than the second material. For example, the first material and the second material may be the same or similar build material but with the first material as new material and the second material as recycle material. In other examples, the first material and the second material may be different types of build material.

The material vessels 102, 106 may be hoppers, containers, or other types of vessels. Moreover, as discussed below, in one example, the material vessels 102, 106 may receive material from a removable first material cartridge and a removable second material cartridge, respectively, inserted into the 3D printer 100 by a user. The feeders 106, 112 may be a rotary feeder, rotary valve, auger, screw feeder, on-off valve, pulsating valve, piston valve, reciprocating valve, reciprocating-piston valve, and so on.

The printer 100 includes a controller 114 that adjusts operation of the first feeder 106 and the second feeder 112 to maintain the build material as having a specified ratio of the first material 104 to the second material 112. The controller 114 may adjust the operation of the first feeder 106 and the second feeder 112 based on indication of material discharge rate of the first material vessel 104 and the second material vessel 108 through the respective feeders 106, 112. The controller 114 may be communicatively coupled with the feeders 106, 112 or with control devices associated with the feeders 106, 112, as indicated by the dashed line 116.

In some examples, the controller 114 may be a computing device having a processor and memory storing code executed by the processor to adjust operation of the feeders 106, 112 to maintain set point or the specified ratio. In certain examples, the controller 114 may be a component of the printer 100 computer system. The controller 114 may include a processor, microprocessor, central processing unit (CPU), memory storing code executed by the processor, an integrated circuit, a printed circuit board (PCB), a printer control card, a printed circuit assembly (PCA) or printed circuit board assembly (PCBA), an application-specific integrated circuit (ASIC), a programmable logic controller (PLC), a component of a distributed control system (DCS), a field-programmable gate array (FPGA), or other types of circuitry. Firmware may be employed. In some cases, firmware if employed may be code embedded on the controller such as programmed into, for example, read-only memory (ROM) or flash memory. Firmware may be instructions or logic for the controller hardware and may facilitate control, monitoring, data manipulation, and so on, by the controller.

In some examples, a first sensor associated with the first material vessel 102 provides the indication of material discharge rate of first material 104 from the first material vessel 102. A second sensor associated with the second material vessel 108 may provide the indication of material discharge rate of second material 110 from the second material vessel 108. Alternatively, or in addition, a sensor associated with an internal conveying system may provide the indication of material discharge rate of the first material vessel 106 and the second material vessel 108.

The example 3D printer 100 may include the internal conveying system to transport build material including the first material 104 and the second material 110. In some examples, the conveying system may receive the first material 104 and the second material 110 discharged through the respective feeders 106, 112. Indeed, in certain examples, the first material vessel 102 and the second material vessel 108 may discharge the first material 104 and the second material 110 through the feeders 106, 112, respectively, into the conveying system. If so, as mentioned, a sensor associated with the internal conveying system may provide the indication of material discharge rate of the first material vessel 102 and the second material vessel 108.

In one example, the first sensor and second sensor are weight sensors (e.g., load cells) and are a primary feedback of discharge rates from the vessels 102, 108. In that example, level sensors on the vessels 102, 108, if employed, may be a secondary feedback of the discharge rates. Further, in that example, for a pneumatic conveying system, a pressure sensor or other sensor in the conveying system, such as on a conveying conduit or at the motive component (blower), may provide secondary or tertiary feedback in which the combined discharge rate from the vessels 102, 108 can at least be inferred. For instance, the amount of build material powder being transported and entrained in conveying air in a conveying conduit may be calculated or estimated based on the pressure or pressure profile in the pneumatic conveying conduit.

The conveying system as a dilute-phase pneumatic conveying system mixes the first material and the second material in-line in the conveying gas during transport. The conveying gas may be air, nitrogen, filtered air, ambient air, and so forth. In one example for dilute phase, the conveying gas (e.g., air) flow rate through a conveying conduit is in the range of 4 cubic feet per minute (cfm) to 10 cfm, or in a range of 5 cfm to 9 cfm, or in the range of 6 cfm to 8 cfm, (in the range of 113 litres per minute to 283 litres per minute, or in the range142 litres per minute to 255 litres per minute, or in the range 170 litres per minute to 227 litres per minute). The units of these volumetric flow rates of conveying gas or air may be actual cfm or acfm. The velocity of the conveying gas may be in the range of 10 meters per second (m/s) to 25 m/s. or in the range of 13 m/s to 22 m/s, or in the range of 15 m/s to 19 m/s, and so on. The nominal inner diameter of a conveying conduit may be in the range of 0.375 inch to 1.5 inch, 0.375 inch to 1.0 inch, 0.5 inch to 1.0 inch (0.953 cm to 3.81 cm, 0.953 cm to 2.54 cm, 1.27 cm to 2.54 cm). In some examples, the nominal diameter of a conveying conduit is 0.5 inch, 0.625 inch, or 0.75 inch (1.27 cm, 1.59 cm, or 1.91 cm. Conduits having a nominal inner diameter outside of these ranges or values are applicable. Further, for the dilute-phase conveying, the ratio of build material or powder mass to air mass may be less than 6, less than 5, less than 4, less than 3, less than 2, less than 1, and so forth. The mass rate of the build material or powder can be in a range of 2 grams per second (g/s) to 10 g/s, such as 5 g/s. Other mass rate ranges are applicable.

The 3D printer 100 may include a feed vessel or dispense vessel to make available build material for the 3D printer 100 to form the 3D object. If so, the internal conveying system may transport build material including the first material and the second material to the dispense vessel contemporaneous with the 3D printer forming the 3D object.

As indicated, the first material vessel 102 and the second material vessel 108 may be internal within the 3D printer 100, such as within a housing 118 of the printer 100. The housing 118 may also be the same housing around the build enclosure and the build platform on which the 3D object is formed. In some examples, the housing 118 may be an outer housing or casing of the 3D printer 100.

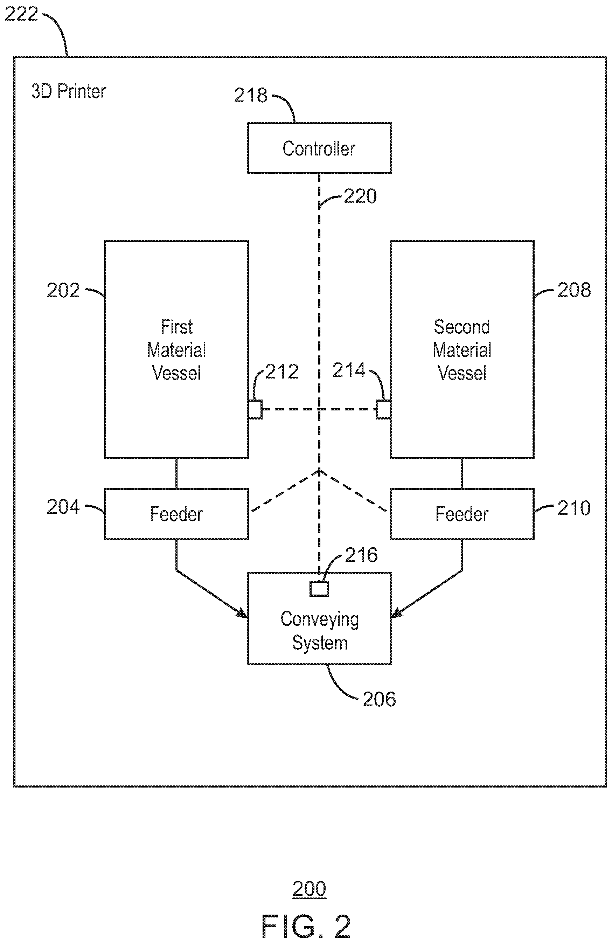

Fig. 2 is a 3D printer 200 having a first material vessel 202 to store first material and provide the first material as build material (e.g., powder) through a first feeder 204 to a conveying system 206. The 3D printer 200 has a second material vessel 208 to store second material and provide the second material as build material through a second feeder 210 to the conveying system 206. In one example, the first material is fresh or new material, and the second material is recycle material. The recycle material, which may also be labeled as recycled material, may be unfused or excess build material recovered from the 3D printing within the printer 200, such as from a previous print job.

A first sensor 212 may measure an operating condition of the first material vessel 202 to provide indication of the material discharge rate of the first material from the first material vessel. Likewise, a second sensor 214 may measure an operating condition of the second material vessel 208 to provide an indication of the material discharge rate of the second material from the second material vessel 208. The sensors 212, 214 may be weight sensors such as load cells. The sensors 212, 214 may instead or additionally be level sensors (e.g., capacitive, optical, ultrasonic, etc.) or other types of sensors. Furthermore, one or more sensors 216 may measure an operating condition of the conveying system 206 to provide an indication of the material discharge rate from the first material vessel 202, from the second material vessel 208, or the combined material discharge rate from both the first material vessel 202 and the second material vessel 208.

As discussed, the 3D printer 200 includes a controller 218 that receives the measurement or indication from the sensors 212, 214, 216 and adjusts operation of the feeders 204, 210 in response, as indicated by the dashed line 220. The adjustment may be to maintain the desired material discharge rates through the feeders 204, 210. In certain examples, the controller 218 may adjust an operating parameter of each feeder 204, 210 to maintain a specified ratio of first material to second material, as discharged to the conveying system 206. In one example, the feeders 204, 210 are rotary feeders, augers, screw feeders, or rotary valves, and the operating parameter is rpm of the feeder. In one example, the feeders 204, 210 are rotary feeders and the rpm is in the range of 2 rpm to 20 rpm. The specified ratio of first material to second material may be based on weight or volume. Again, the conveying system 206 may transport both first material and second material as build material for the 3D printing. The conveying system 206 may provide build material having the specified ratio of first material to second material. The ratio may range from zero, e.g., no first material, all second material, to 1.0, e.g., all first material, no second material. The ratio may be a weight ratio, volume ratio, or other type of ratio. The ratio as a weight ratio (mass ratio) or volume ratio may range from 0.01 to 0.99, 0.05 to 0.95, 0.1 to 0.9, 0.15 to 0.85, 0.2 to 0.8, 0.25 to 0.75, 0.3 to 0.7, etc. In a particular example, the feed build material may be 20% first material (e.g., new material) by weight and 80% second material (e.g., recycle material by weight), yielding a weight ratio of 0.25. In another example, the feed build material has 20% new material by volume and 80% recycle material by volume, yielding a volume ratio of 0.25.

The controllers 206, 208 may include firmware or code 214, 216, e.g., instructions, logic, etc., stored in memory and executed by a processor to implement their respective control functions discussed herein. If firmware is employed, the firmware may provide for interaction between code and hardware, including to interpret commands and provide for control generally. The firmware configuration may be unique to the printer 200 or given controllers 206, 208, incorporating properties of the printer 200 and respective controller. In general, as mentioned, the controller may be a computing device or control card and may include a CPU, memory storing executable code, an integrated circuit, a PCB, a printer control card, a PCA or PCBA, an ASIC, a PLC, a DCS component, a FPGA, and so on. Moreover, as indicated, the printer 200 components depicted in Fig. 2 may be internal within the printer 200, such as within a housing 222 of the printer 200.

Lastly, as noted, the build material including the first material and the second material may be powder. As used herein, the term "powder" as build material can, for example, refer to a powdered, or powder-like, material which may be layered and sintered via an energy source or fused via a fusing agent and energy source in a 3D printing job. The powdered material can be, for example, a powdered semi-crystalline thermoplastic material, a powdered metal material, a powdered plastic material, a powdered composite material, a powdered ceramic material, a powdered glass material, a powdered resin material, or a powdered polymer material, among other types of powdered material.

Fig. 3 is a 3D printer 300 having a first material vessel 302 to discharge first material through a first feeder 304 into a conveying system 306. The printer 300 includes a second material vessel 308 to discharge a second material through a second feeder 310 to the conveying system 308. The printer 300 components depicted in Fig. 3 may be integrated internal within the printer 300, such as within a housing 358 of the printer 300. In the illustrated example, the first material and the second material may discharge into a conveying stream in a conduit of the conveying system 306. Moreover, as depicted, the first material vessel 302 and the second material vessel 308 may be in series.

Additionally, in this example, the 3D printer 300 has a third material vessel 312 that discharges a third material through a third feeder 314 into the conveying system 306. As depicted in examples of subsequent figures, the third material vessel 312 in certain cases may receive excess or unfused build material recovered from within the printer 300. In some examples, the third material may be classified as first material or second material. Thus, in those examples, the third material may be incorporated as additional first material or additional second material. In one example, the first material is new material and the second material is recycle material.

In the illustrated example, the conveying system 306 is a pneumatic conveying system having a gas inlet 316 to receive a conveying gas. For instance, the gas inlet 316 may be an air inlet and the conveying gas may be air. In one example, the gas inlet 316 is a conduit (e.g., tubing, piping, etc.) with an open end to receive ambient air or filtered air as the conveying gas. In some examples, the conveying system 306 pulls in filtered air through the gas inlet 316 within the printer 300. For instance, the open end of the conduit may be disposed in an internal volume region of the printer 300 to receive the filtered air. In certain examples, the internal volume region may be called a lung of the conveying system 306 or the printer 300. In a particular example, the received gas may be ambient air having humidity, vapor, or moisture that has been filtered and resides as filtered air inside the printer 300.

The conveying system 306 may transport the feed build material 318 via the conveying gas. The feed build material 318 may include the first material from the first material vessel 302 and the second material from the second material vessel 308. In some instances, with the third material vessel 312 in operation discharging third material, the feed build material 318 may also include the third material discharged from the third material vessel 312. In examples, the first material vessel 302 has a weight sensor 320, the second material vessel 308 has a weight sensor 322, and the third material vessel 312 has a weight sensor 324. In some examples, the vessels 302, 308, 312 may be disposed on their respect weight sensors 320, 322, 324. In certain examples, the weight sensors 320, 322, 324 are weight scales or load cells. The material vessels 320, 322, 324 may have additional sensors such as a level sensor, pressure sensor, temperature sensor, and so on. The weight sensors 320, 322, 324 may measure the weight of the material vessels 302, 308, 312, respectively. Therefore, in examples, the respective material discharge rate from the material vessels 302, 308, 312 through the feeders 304, 310, 314 may be determined based on the change in the measured weight or mass over time. The determined material discharge amounts or rates may be in units of mass per time. Also, with known or estimated density of the material, or via level sensors, the material discharge amounts or rates may be determined in units of volume or volume per time.

In some examples, a controller 326 of the 3D printer 300 may receive the weight measurements from the sensors 320, 322, 324 and determine the material discharge rates of the respective vessels 302, 308, 312. In other examples, the controller 326 may receive the values of the material discharge rates as determined by another computing component of the printer 300 based on the weight measurements or other measurements. Thus, the controller 326 may determine or receive the values of the material discharge rates. The controller 326 may adjust operation of the feeders 304, 310, 314 to give or maintain a desired amount or rate of feed build material 318 and a specified ratio of first material to second material in the feed build material 318.

In cases with the third material different than the first material and the second material, the controller 326 may adjust operation of the feeders 304, 310, 314 to give or maintain, for example, specified ratios of first material to second material to third material. For instance, the controller 326 may maintain a first ratio of first material to second material, a second ratio of first material or second material to the third material, the specified amount of feed build material 318 with any constraints, and so forth. Other ratios may be applicable.

Table 1 below gives an example control-scheme basis that the controller 326 may employ to adjust an operating parameter of the feeders 304, 310 based on the weight or mass change in the material vessels. The first column of Table 1 is time over the incremented time interval in which the controller 326 may determine and make adjustments. The second column is the mass change of the material in the first vessel 302 over the time interval indicated by the vessel weight sensor 320. Likewise, the third column is the mass change of the material in the second vessel 308 over the time interval indicated by the vessel weight sensor 322.

**Table 1. Example Control Calculations**

| Time | First Vessel | Second Vessel | Actual Ratio (Target = X) | Actual Sum (Target = Y) |
|---|---|---|---|---|
| t=t1 =t0+Δt | Δm_{1, t1} | Δm_{2, t1} | Ratio = Δm_{1, t1}/Δm_{2, t1} | Sum = Δm_{1, t1} + Δm_{2, t1} |
| | | | Error_{R} = X-Ratio | Error_{S} = Y-Sum |
| t=t2 =t1 +Δt | Δm_{1, t2} | Δm_{2, t2} | Ratio = Δm_{1, t2}/Δm_{2, t2} | Sum = Δm_{1, t2} + Δm_{2, t2} |
| | | | Error_{R} = X-Ratio | Error_{S} = Y-Sum |

The fourth column in the above Table 1 is the calculated actual mass ratio based on the mass change in the vessels 302, 308 over the time interval. For a given density of the material, the actual volume ratio may be calculated. As for error, the calculated actual ratio is compared to the specified or target ratio (X) to determine a ratio error (Error_{R}) for the controller to base adjustments of operation of the feeders 304, 310. In one example, the target ratio (X) as a specified ratio is 0.25. However, as discussed above, this target ratio (X) as a specified ratio may be other values and fall within differing ranges. The fifth column of Table 1 is the calculated actual mass sum based on the mass change in vessels 302, 308 over the time interval. The sum may be the combined mass discharge over the time interval from the vessels 302, 308. A combined material discharge rate (mass per time) may be calculated by dividing the sum by the time interval. In the third column, the calculated actual sum is compared to the specified or target sum (Y) to determine a sum error (Error_{S}) for the controller to base adjustments of operation the feeders 304, 310. In one example, the target sum (Y) is at least 240 grams per minute.

In response to the Error_{R} and/or Errors, the controller 326 may adjust an operating parameter (e.g., rpm, etc.) of one or both of the feeders 304, 306 to alter the material discharge rate (mass or volume) from one or both of the vessels 302, 308. The printer 300 control scheme may include constraints to guide the controller 326 adjustments of the feeders based on the error. The control scheme may also include, for example, tuning constants such as gain, proportional, integral, derivative, and so forth, for the controller 326 to determine adjustments of the feeder operation in response to the error. Lastly, the control routine may incorporate the third material vessel 312 and third feeder 314, and additional material vessels and feeders.

Furthermore, the feeders 304, 310, 314 may each have a sensor, such as a Hall effect sensor, to synchronize the provision or drops (e.g., pocket-drops) of material through the feeders. A Hall effect sensor may be a transducer that varies its output voltage in response to a magnetic field. Hall effect sensors generally may be employed for proximity switching, positioning, speed detection, and current sensing applications. In one form, the sensor operates as an analog transducer, directly returning a voltage.

The internal conveying system 306 may transport the feed build material 318 to a dispense vessel 328 (e.g., hopper) for the 3D printing. The 3D printing may be the 3D printer forming a 3D object 332 from build material on a build platform 330. As for product applications, the 3D printer 300 may fabricate objects 332 as prototypes or products for aerospace (e.g., aircraft), machine parts, medical devices (e.g., implants), automobile parts, fashion products, structural and conductive metals, ceramics, and so forth. In one example, the 3D objects 332 formed by the 3D printer 300 are mechanical parts which may be metal or plastic, and which may be equivalent or similar to mechanical parts produced, for example, via injection molding.

In the transport, the feed build material 318 may enter a separator 334 that separates conveying gas 336 and discharges the build material 338 with little or no conveying gas to the dispense vessel 328. In one example, the separator 334 is a centrifugal separator or cyclone. Moreover, the separator 334 may be integrated physically with the dispense vessel 338 or separate from the dispense vessel 334. A motive component 338 of the conveying system 306 may pull the separated conveying gas 336 discharged by the separator 334. The motive component 338 may discharge the conveying gas 336, as indicated by arrow 340, to a volume within the printer 300, to ambient external to the printer 300, or to other equipment for additional processing, and so on. The motive component 338 may be a blower, a fan, a centrifugal blower, axial blower, and the like, in examples of the conveying system 306 as a pneumatic conveying system.

In the illustrated example, the motive component 338 is disposed at an end portion of the conveying system 306 and, therefore, the conveying system 318 may be a negative-pressure pneumatic conveying system. In other examples, the motive component 338 may instead be disposed at a front or upstream portion of the conveying system 306 with the motive component 338 "pushing" the conveying gas instead of pulling the conveying gas. Thus, in those examples, the conveying system 318 may be a positive-pressure pneumatic conveying system. Moreover, the conveying system 306 may generally include the conveying conduit(s), the motive component 338, and other equipment, as well as valves, instrumentation, conduit fittings, and so forth. In some examples, the separator 334 may be characterized as a component of the conveying system 306.

In examples, the separator 334 may discharge the conveying gas 336 through a filter 342 and a meter or meter element 344 in route to the motive component 338. In some examples, the filter 342 may remove residual build material or solids from the conveying gas 336. In one example, the meter is a differential-pressure flow meter and the meter element 344 is a venturi or a section of conduit having a narrowing inner diameter. The meter element 344 may include a first pressure tap on the conduit upstream of the venturi and a second pressure tap downstream of the venturi to provide for measurement of pressure and therefore the determination of differential pressure across the venturi. The flow meter may determine the flow rate of conveying gas 336 based on the differential pressure. Other meters for measuring flow rate or pressure of the conveying gas 344 are applicable. In other examples, an orifice plate or other flow element may be employed as the meter element 344.

The conveying system 306 may include a sensor 346 associated with the motive component 338. For example, with the motive component 338 having a motor, the sensor 346 may be coupled with the motor or an encoder to indicate speed, amps, voltage, pressure, or other variables of the motive component 338 and its motor. In one example, blower voltage may indicate total amount of build material 318 being conveyed with closed-looped control on air flow rate.

The sensor 346 can also include a pressure sensor at the suction or discharge of the motive component 338 to indicate pressure. Such pressure indication may provide for an estimation of the upstream material 318 flow rate in some examples. The conveying system 306 may also include pressure sensors at other locations to estimate material mass flow rate. For example, a pressure sensor may be disposed on the conveying line or at the separator 334, and so forth. Measurement of the pressure change, including if the blower or motor voltage is generally held constant, can provide in particular examples an indication or estimation of the total mass flow rate of the material 318.

In certain examples, the controller 326 may construe, determine, or calculate an estimated amount of feed build material 318 flowing through the conveying system 306 based on measurements provide via the sensor 346 or flow element 344, or via other sensors in the conveying system 306. Therefore, the controller 326 in some examples may determine the combined material discharge rate from the material vessels 302, 308, 312. The controller 326 may adjust operation of one or more of the feeders 304, 310, 314 in response to the combined material discharge rate as determined. The weight sensors 320, 322, 324 can provide feedback on proportions of build material powder delivered from the respective feeders 304, 310, 314.

As mentioned, the separator 334 may discharge separated build material 338 to the dispense vessel 328 for the 3D printing. In the illustrated example, the dispense vessel 328 may discharge build material 338 through a feeder 348 to a feed handling system 350. The feed handling system 350 may provide successive layers of build material 338 for the build platform 330, as indicated by arrow 352. The feeding handling system 350 may include a volume-delivery component, a provision vessel or dosing container, a supply surface or deck, a build-material applicator or powder spreader, and so forth. Furthermore, the dispense vessel 328 may have a level sensor 354 or weight sensor. Moreover, the controller 326 may provide for each layer of build material 338 on the build platform 330 to have a specified ratio of first material to second material. The specified ratio may different for respective layer or layers of build material 338 on the build platform 330 for the same 3D object 332 being formed.

Further, in some examples, the dispense vessel 328 has an aeration device 356 to promote mixing of the first material and the second material in the dispense vessel 328, including in a lower portion of the dispense vessel 328. In addition to the mixing in the upstream conveying line of the conveying system 306, the aeration device 356 may provide for mixing to promote a relatively uniform mixture of the first material and the second material at the specified ratio. In certain examples, the aeration device 356 may provide for targeted blasts of gas or air to a base portion of the dispense vessel.

The blasts may be relatively small-volume to aerate and mix the powdered build material without significantly interfering with performance of separator 324. Such "micro-aeration" may avoid upward air amounts and velocities that could meaningfully disturb cyclone separator 324 performance. In one example, the aeration device 356 includes a relatively small pump and, for instance, a solenoid valve. Thus, in that example, the aeration may be performed via targeted blasts of air provided by the pump at an adjustable interval and volume via the solenoid valve.

As indicated, the mixing of the first material and the second material is effected in the conveying of the build material 318. For a dilute-phase pneumatic conveying system, the dilute conditions and the relatively high velocity (e.g., in the range of 10 to 20 meters per second) of the conveying gas and build material 318 may promote mixing. The mixing uniformity via the conveying system 306 may be at a scale of scrutiny of at least 10 cc of transported build material 318. For example, a sample of 10 cc or greater of build material collected from the dispense vessel 328 may have the specified ratio.

Moreover, the transport and mixing in-line of the first material and the second material as the build material 318 may be contemporaneous with the print job. This may be in contrast to a batch system in which a dispense vessel or feed vessel is filled prior to the print job and build material is not transported during the print job. In the illustrated example, the continuous or semi-continuous transport of build material 318 during the forming of the 3D object 322 may accommodate a relatively smaller dispense vessel 328. In some examples, the dispense vessel 328 does not have volume capacity to hold or store an adequate amount of build material for the print job. Therefore, the dispense vessel 328 may receive build material during the print job. In one example, the dispense vessel 328 is less than two liters in size.

To supply the build material 318, 338, 352 for the generating of the 3D object 332, and with the feeders 304, 310, 314, 348 as rotary feeders, the rotation of the feeders may be generally continuous. The rotation may also be intermittent. In one example cycle, the rotation of the two feeders 304, 310 may be continuous for at least 25 seconds and off for less than 10 seconds. The rotation may be similar for the feeder 314 if in operation. In an example cycle for the feeder 348 at the dispense vessel 328, the rotation timing cycle is continuous for less than 2 seconds and off for more than 3 seconds. Other timing cycles are applicable. Rotation of the feeders 304, 310 may be stopped to the dispense vessel 328 having an adequate amount of build material. Rotation of the feeder 348 may be stopped when the feed handling system 350 has an adequate amount of build material.

In summary for examples, the motive component 338 (e.g., blower) may pull air through a conduit (a "pneumatic line") at a velocity, for example, in a range of 10 to 20 meters per second (m/s). In some examples, the feeders 304, 310 provide the build material powder into the pneumatic line. A user may set, via the controller 326 or other control element, the ratio of first material (e.g., fresh powder) to second material (e.g., recycle powder), including setting of operating parameters (e.g., rpm) of the feeders 304, 310. The printer 300 or controller 326 may check the ratio via the sensors 320, 322 which may be weight sensors, load cells, etc. The material (powder) may be dropped from the feeders 304, 310 in such a way that the first material and second material powder dollops overlap.

In one example, the conduit or tube length between the feeder 310 and the separator 334 is less than 3 meters. In that example, the transit time of the build material 318 through the conduit or tube to the separator 334 and dispense vessel 328 is less than one second. The separator 334 (e.g., cyclone) may separate the build material from the air-stream. The build material 338 may then fall into the dispense vessel 328 (e.g., hopper). The first material and the second material may mix in the upstream pneumatic conveying line and further be mixed in the dispense vessel 328 by air-blasts administered by puffer or aerator 356. The aerator 356 may be a micro-aerator. The aerator 356 may be at a base portion of the dispense vessel 328. The aerator 356 may be near and upstream of the feeder 348.

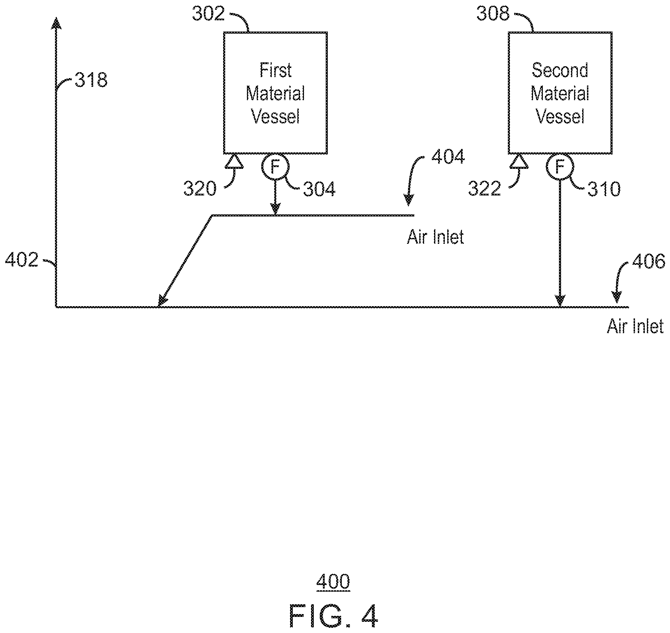

Moreover, as discussed, the 3D printer 300 may include a third material vessel 312 which may provide material for the mixing scheme. The third material vessel 312 may have a feeder 314 and weight sensor 324. In general, the examples of the techniques may be extended from 2 to n material vessels. Lastly, a parallel arrangement of material vessels 302, 308 is depicted in Fig. 4.

Fig. 4 is a material supply system 400 of a 3D printer. The material supply system 400 includes a pneumatic conveying system 402 having parallel air inlets 404 and 406. The conveying system 402 may have a motive component such as a blower to pull-in air via the air inlets 404, 406 for conveying gas. The air may be ambient air from the environment external to the printer or may be air (e.g., filtered air) internal to the printer. In some examples, the air inlets 404, 406 are each a conduit with an open end disposed in an internal volume region of the printer to receive air.

The material supply system 400 includes a first material vessel 302 that discharges first material through a feeder 304 into a first conduit of the conveying system 402. The first conduit may be associated with the first air inlet 404. The material supply system 302 includes a second material vessel 308 that discharges second material into a second conduit of the conveying system 402. The second conduit may be associated with the second air inlet 406. The conveying system 402 may combine the first material and the second material as feed build material 318 in a conduit that merges the first conduit and the second conduit. The conveying system 400 may transport the first material and second material via conveying air and a motive component such as a blower. The blower may provide a motive force on the conveying air.

The motive component of the conveying system 402 may be disposed near or at a terminal end of the conveying system 402 to pull, via the conveying gas, the build material 318 including the first material and the second material. If so, the conveying system 402 may be a negative-pressure pneumatic conveying system. On the other hand, the conveying system 402 may include a first motive component disposed near the first air inlet 404 and a second motive component disposed near the second air inlet 406. In that case, those two motive components may push the build material 318 via the conveying air. If so, the conveying system 402 may be a positive-pressure pneumatic conveying system. In general, the conveying system 402 may apply, via the motive component(s), a motive force to the conveying air and the flowing build material 318.

The conveying system 402 may transport the build material 318 for the 3D printing such as for a dispense vessel or build platform in which the printer forms a 3D object on the build platform. The material supply system 400 may include sensors to measure operating parameters of the material vessels 302, 308 to indicate the respective material discharge rate or amount from the vessels 302, 308. In one example, the sensors include weight sensors 320, 322. A controller of the 3D printer may receive indications from the sensors 320, 322 and adjust operation of the feeders 304, 310 based on the indications to maintain a specified ratio of first material to second material in the build material 318, and to maintain a set point of total combined material discharge amount or rate from the vessels 302, 308.

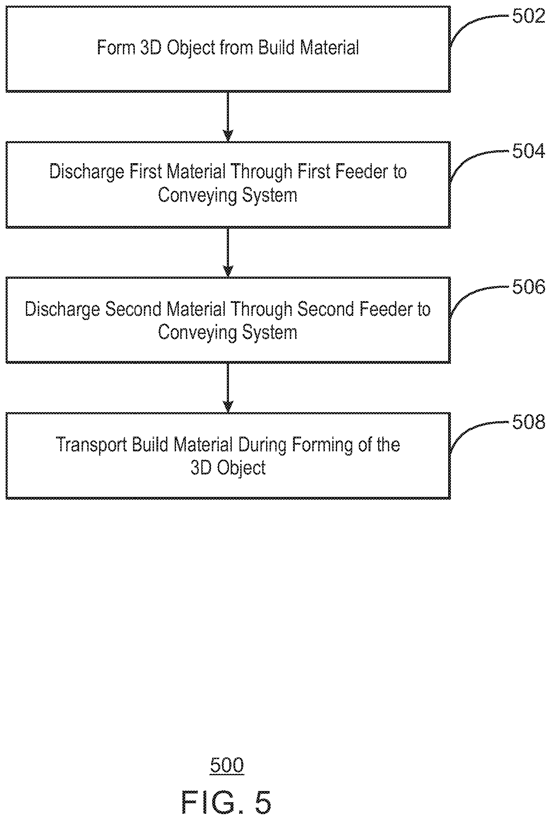

Fig. 5 is a method 500 of operating a 3D printer. At block 502, the method includes forming a 3D object from build material. For example, the printer may form the 3D object layer-by-layer from build material on a build platform. At block 504, the method includes discharging first material from a first material vessel through a first feeder into a conveying system. In examples, a controller may modulate via the first feeder the amount or rate of first material discharging from the first material vessel. At block 506, the method includes discharging second material from a second material vessel through a second feeder into a conveying system. In examples, the controller may modulate via the second feeder the amount or rate of second material discharging from the second material vessel. Moreover, the first material vessel, the second material vessel, and the conveying system may be internal within the 3D printer. At block 508, the method includes transporting build material including the first material and the second material during the forming of the 3D object. The transporting may be via the conveying system. The build material may have a specified ratio of first material to second material. The ratio may be a weight ratio or a volume ratio. Lastly, a controller may adjust operation of the first feeder and the second feeder to maintain the specified ratio and the total amount of build material.

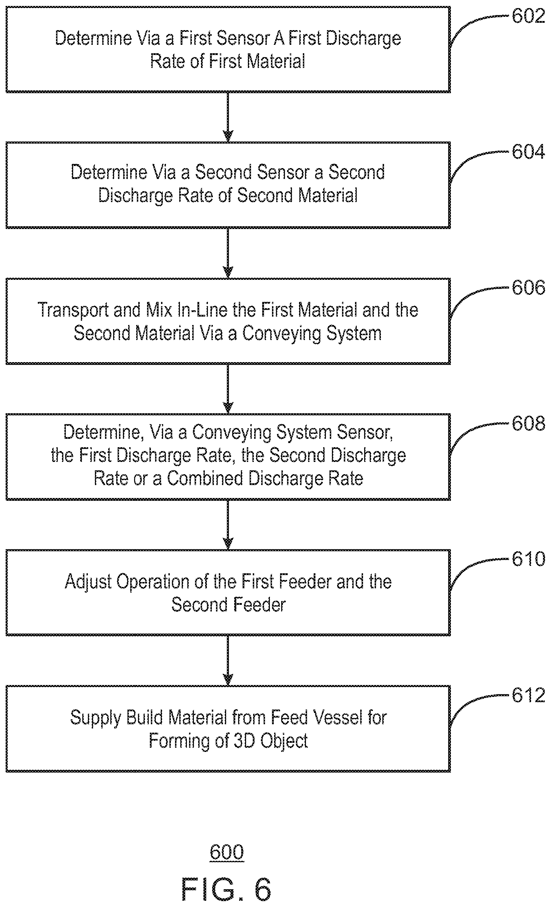

Fig. 6 is a method 600 of operating a 3D printer and be implemented in view of the method 500 of Fig. 5. At block 602, the method includes determining or measuring, via a first sensor associated with the first material vessel, a first discharge amount or rate of the first material from the first material vessel.

At block 604, the method includes determining or measuring, via a second sensor associated with the second material vessel, a second discharge amount or rate of second material from the second material vessel. The first and second sensors may be level sensors, weight sensors, load cells, solids flow meters, and so forth. The determining or calculating of the discharge amounts or rates may be by a computing device or controller of the printer.

At block 606, the transporting of the build material may include transporting, via the conveying system, the build material to a dispense vessel or feed vessel. The transporting includes mixing in-line the first material and the second material in the conveying system. The conveying system is a dilute-phase pneumatic-conveying system and in which the dilute conditions and relatively high transport velocity promotes mixing. The mixing uniformity via the conveying system may be at a scale of scrutiny of at least 10 cc of transported build material. For example, a sample of 10 cc or greater of build material collected from the dispense vessel may have the specified ratio, or substantially close to the specified ratio.

At block 608, the method includes determining, via a conveying system sensor, the first discharge rate, the second discharge rate, or the combined amount or combined rate of the first discharge rate and the second discharge rate. For example, the sensor may be a pressure sensor in the conveying system, or a sensor associated with a motor of the motive component (e.g., blower) of the conveying system, and so forth. The determining or calculating of the discharge amounts or rates via the conveying system sensor may be by a computing device or controller of the printer.

At block 610, the method includes adjusting, via a controller, operation of the first feeder and the second feeder to maintain the specified ratio in response to the first discharge rate or the second discharge rate, or both. For example, the controller may change the set point of an operating parameter of the first feeder or the second feeder, or both. In one example, the controller changes the rpm of the first feeder and/or the second feeder to maintain the specified ratio. Also, the controller may change the operation of the feeders, such as set point of the operating parameter or the rpm, to maintain a desired total amount of build material or the desired total amount of first material and second material discharged from the vessels, respectively.

At block 612, the method includes supplying build material from the feed vessel for the forming of the 3D object. For example, the feed vessel may discharge build material to a feed handling system that provides build material for a build platform on which the 3D object is formed. The feed vessel and the feed handling system may provide for successive layers of build material on the build platform. In one example, the printer feeders, conveying system, and feed vessel may provide for changing or different specified ratios for respective successive layers of build material on the build platform.

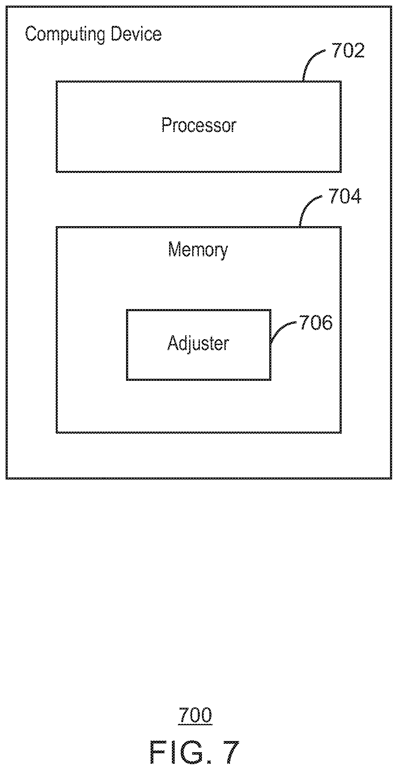

Fig. 7 is a computing device 700 of a 3D printer. The computing device 700 may have a hardware processor 702 and memory 704. The hardware processor 702 may be a microprocessor, central processing unit (CPU), an ASIC or other circuitry, printer control card(s), and the like. The processor 702 may be one or more processors, and may include one or more cores. The memory 704 may include volatile memory such as random access memory (RAM), cache, and the like. The memory 704 may include non-volatile memory such as a hard drive, read only memory (ROM), and so forth. The computer system 700 may include code, e.g., instructions, logic, etc., stored in the memory 700 and executed by the processor to direct operation of the printer and to facilitate various techniques discussed herein with respect to control, and so on. In one example, the code includes an adjuster 706 executed by the processor 702 to adjust operation of feeders, as discussed above, to maintain a specified ratio of materials and a total amount of the materials, and so on. Firmware may be employed.

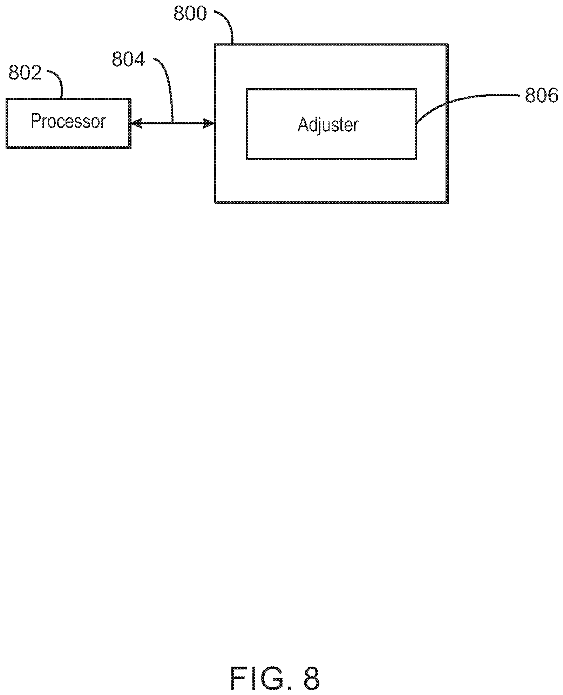

Fig. 8 is a computer-readable medium 800 that may contain code for execution to implement techniques described herein with respect to printer control. The medium may be a non-transitory computer-readable medium 800 that stores code that can be accessed by a processor 802 such as via a bus 804. The computer-readable medium 800 may be a volatile or non-volatile data storage device. The medium 800 may also be a logic unit, such as an ASIC, FPGA, or an arrangement of logic gates implemented in one or more integrated circuits. Again, the medium 500 may store code, e.g., instructions, logic, firmware, etc., executable to facilitate the techniques described herein. For example, an adjuster code 506 may facilitate a controller of a 3D printer to adjust operation of feeders to maintain a specified ratio of a first material to a second material. An example of a non-transitory, computer readable medium for a 3D printer includes machine-readable instructions, that when executed, direct a processor to measure or determine, via a first sensor associated with a first material vessel, a first discharge rate of the first material from the first material vessel; measures or determines, via a second sensor associated with the second material vessel, a second discharge rate of second material from the second material vessel; and adjust operation of the first feeder and the second feeder to maintain the specified ratio in response to the first discharge rate or the second discharge rate, or both.

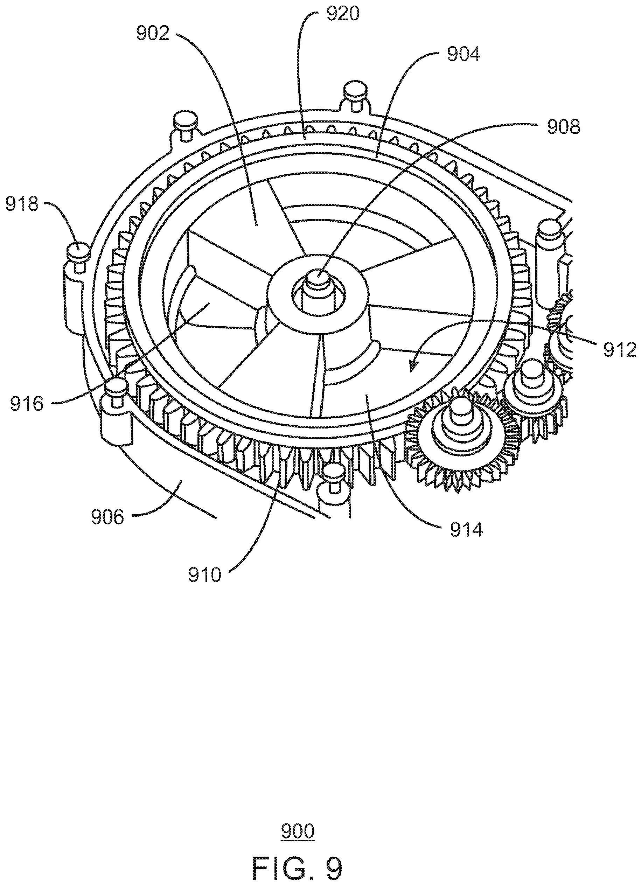

Fig. 9 is a rotary feeder 900 of a 3D printer. In certain examples, the rotary feeder 900 may be analogous to the feeders 106, 112, 204, 210, 304, 310 discussed with respect to the preceding figures. However, other types of feeders may be employed for the aforementioned feeders 106, 112, 204, 210, 304, 310. In this example, the rotary feeder 900 has vanes (or spokes) 902 meeting an inside surface 904 of a housing 906 of the feeder 900. The vanes 902 rotate within the inside surface 904. The vanes 902 may be secured within the feeder 900 via a coupling element 908, such as a bolt. In the illustrated example, the vanes 902 may rotate around the coupling element 908. The feeder has drive or rotating elements 910, such as gears, to rotate the vanes 902. In operation, build material 912, such as powder from a material vessel, may flow into a cavity or pocket 914 between two vanes 902. In one example, the build material 912 may fall by gravity from the material vessel.

The feeder 900 is depicted with three vanes 902 and three pockets 914 and, therefore, three pockets 914 per revolution. However, the feeder 900 may have more or less than three pockets 914 per revolution. As for discharge, the feeder 900 may have an opening 916 in the bottom portion of the feeder 900 to discharge the build material 912, such as into a conduit of a conveying system. The amount of build material 912 discharged may be a function of the rpm of the vanes 902 around the coupling element 908. In some examples, each pocket 914 volume may be in the range of 2 cc to 15 cc, or 3 cc to 12 cc, or 4 cc to 10 cc, and the like. The number of pockets may be in the range of 3 to 10 pockets, 3 to 8 pockets, 3 to 6 pockets, 3 to 5 pockets, and so on.

A motor (e.g., a direct current or DC motor) may be employed under, for example, encoder control to control the rpm of the rotary feeder 900. In some examples, the rpm of the feeder 900 in operation is in the range of 2 rpm to 20 rpm. There may be a gear train between the motor and the feeder wheel and, therefore, the motor speed may be greater (e.g., significantly greater) than the feeder rpm or pocket-wheel rpm. In operation in the 3D printer, the rotary feeder 900 rotation may be generally continuous. The rotation may also be intermittent. In one example cycle, the rotation is continuous for at least 25 seconds and off for less than 10 seconds. In another example, the rotation timing cycle is continuous for less than 2 seconds and off for more than 3 seconds. Other timing cycles are applicable. Rotation of a feeder 900 may be stopped because a downstream receiver has an adequate amount of build material.

Moreover, the 3D printer may have a sensor, such as a Hall effect sensor, on the feeder 900 to better synchronize the pocket-drops of material. Lastly, as mentioned, the aforementioned feeders may instead be an auger or other device.

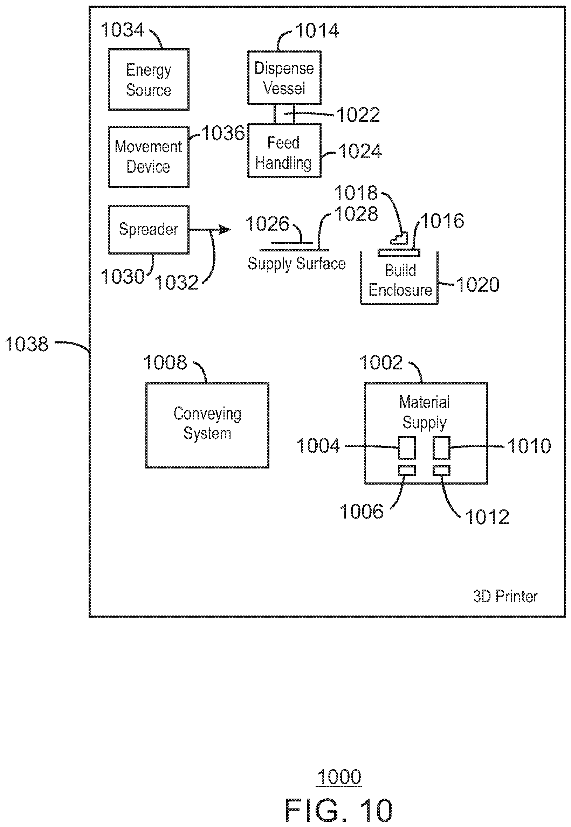

Fig. 10 is a 3D printer 100 having an internal material supply system 1002 including a first material vessel 1004 that discharges first material as build material through a first feeder 1006 to an internal conveying system 1008 of the 3D printer 1000. The material supply system 1002 includes a second material vessel 1010 that discharges second material as build material through a second feeder 1012 to the conveying system 1008. The conveying system 1008 may transport the first material and the second material as build material to an internal dispense vessel 1014 or other feed apparatus. The 3D printer 1000 includes a controller to adjust operation of the feeders 1006, 1008 to maintain a total amount of build material conveyed, as well as a specified ratio of first material to second material in the build material. Sensors associated with the material vessels 1004, 1010 and the conveying system 1008 may provide feedback to the controller of the material discharge rate from the material vessels 1004, 1010.

The material supply system 1002 may include a cartridge receiver to hold an operationally-removable material cartridge. For example, a user may insert a material cartridge into the cartridge receiver. The material cartridge may be a container, canister, or cylinder having build material. The cartridge receiver may be a receptacle, slot, cavity, or the like. The printer 1000 may make available build material from the material cartridge held in the cartridge receiver for the material vessels 1006, 1012. Lastly, in some examples, the material vessels 1006, 1012 may be operationally removable.

The conveying system 1008 that transports build material from the material supply system 1002 to the dispense vessel 1014 is a pneumatic conveying system. Portions of the conveying system 1008 may rely on gravity. The pneumatic conveying system 1008 generally include conduits, fittings, and valves to transport the build material. The pneumatic conveyance system is a dilute phase. The pneumatic conveyance system may be negative-pressure system or a positive-pressure system. The pneumatic conveyance system may include a motive component, such as a blower, to provide a motive force for conveying air through the transport conduits. Lastly, the pneumatic conveying system, if employed as the conveying system 1008, can include separators, such as cyclone, filters, and the like, to separate build material or other solids from conveying air. For example, a cyclone or centrifugal separator may be disposed above the dispense vessel 1014 to separate conveying air from the build material, and discharge the build material (e.g., minus conveying air) to the dispense vessel 1014. A pneumatic conveying system 1008 may be inside the housing 1038 and not an external system.

In the illustrated example, the 3D printer 1000 has a build platform 1016 on which the 3D printer 1000 forms the 3D object 1018. The printer 1000 may have a build enclosure 1020 associated with or at least partially containing the build platform 1016. The conveying system 1008 may transport the first material and the second material as build material to the dispense vessel 1014 for the 3D printer 1000 to print (form or generate) the 3D object 1018 from the build material. The conveying system 1008 may mix in-line the first material and the second material in the conveying to the dispense vessel 1014. Moreover, the conveying system 1008 may transport the build material to the dispense vessel 1014 during the generation of the 3D object 1018. The 3D printer 1000 may sinter, melt, or fuse build material to form the 3D object 1018. For example, the 3D printer 100 may employ SLS, SHS, EBM, thermal fusion, or other AM technique to form the 3D object 1018. The build material may be made from one or more of metal, plastic, polymer, glass, ceramic, or other material.

In operation, the dispense vessel 1014 may discharge build material through a feeder 1022 to a feed handling system 1024. The feeder 1022 may be a metering component including a rotary feeder, rotary valve, screw feeder, auger, and the like. The feed handling system 1024 may include a volume or apparatus to specify and regulate an amount of build material for the build platform 1016. In certain examples, the feed handling system 1024 may provide for a dosed amount in volume or weight of build material for the build platform 1016. In a particular example, the feed handling system 1024 may apply or discharge a layer 1026 of build material onto a supply surface 1028 of the 3D printer 1000. A build-material applicator, such as a powder spreader 1030, may move as indicated by arrow 1032 across the supply surface 1028 to displace and spread the layer 1026 of build material to across the build platform 1016. Such provisioning of build material to the supply surface 1028 and spreading of build material from the supply surface 1028 to across the build platform 1016 may be repeated for each layer of build material on the build platform 1016 in the forming of the 3D object 1018. In other examples, the feed handling system 1024 may apply a layer of build material directly to the build platform 1016 with use of a supply surface 1028. The supply surface 1028, if employed, may be a dosing surface, a supply deck, a source platform, and the like. The build-material applicator or powder spreader 1030 may include a mechanical arm, a roller, or other feature to push or pull the layer 1026 of build material to the build platform 1016. The 3D printer 100 may form the 3D object 1018 layer-by-layer from successive layers of build material on the build platform 1016.

In examples, the build platform 1016, which receives build material to form the 3D object 1018, may reside on a piston or other elevating apparatus. The 3D printer 1000, including a computing system or controller, may lower the build platform 1016 incrementally as each layer of the 3D object 1018 is formed. For example, each increment (e.g., 60 microns, 80 microns, 100 microns, etc.) may be in the range of 50 microns to 150 microns as the height amount in which the build platform 1016 is lowered for each layer of build material and for the associated formed layer of the 3D object 1016. The increment amount may be less than 50 microns or greater than 150 microns. As depicted, the 3D object 1018 may be formed within the outer housing or housing 1038 of the 3D printer 1500.

In one example, the build platform 1016 is removable and the 3D printer 1000 may be manufactured and sold without the build platform inserted in the 3D printer 1000. As mentioned, the 3D printer 1000 may include a build enclosure 1020 associated with the build platform 1016. The build enclosure 1020 may be a build bucket, build chamber, build container, build housing, and the like. In some examples, the build enclosure 1020 may at least partially contain the build platform 1016. Moreover, the build enclosure 1020 and the build platform 1016 may be components of a build unit of the printer 100. In particular examples, the build unit may be operationally removable from the 3D printer 1000. In other examples, the build unit is not intended to be operationally removable. Moreover, the printer 1000 may also include a build unit processing module to separate printed objects from unfused material. In addition, the 3D printer 1000 may include a 3D printed object recovery zone from which separated 3D objects may be recovered after unfused material extraction. The 3D printer 100 may also include additional internal conveying systems, such as a vacuum system, for recovering excess or unused build material from the build enclosure 1020.

The 3D printer 1000 may include an energy source 1034 to apply energy to build material on the build platform 1016 to form the 3D object 1016 from the build material. The energy source 1034 may be a laser source for SLS, an electron beam source for EBM, a thermal printhead for SHS, a heat source or light source for thermal fusion, and so on. The 3D printer 1000 under computer control may sinter, melt, or fuse selected portions of successive layers of build material on the build platform 1016 to solidify those selected portions to form the 3D object 1018 layer-by-layer. The computer control and the portions selected on each successive layer of build material on the build platform 1016 may be per a 3D model or other electronic data source.

The 3D printer 100 may include a movement device 1036, such as carriage or other drive system, to move or position the energy source 1034 over the build material on the build platform 1016. Indeed, the energy source 1034 may reside on the movement device 1036. The movement device 1036 may include or be associated with a motor, belts, rails, wheels, etc. to provide for movement and positioning of the movement device 1036. In certain examples, the movement device 1036 may have a rest position away from the build platform 1016. Moreover, the powder spreader 1030 may also reside on the movement device 1036. The powder spreader 1030 may share the movement device 1036 with the energy source 1034 or instead have a separate dedicated movement device 1036. Indeed, the printer 1000 may have more than one movement device 1036. The powder spreader 1030 and the energy source 1034 may reside on a movement device 1036, such as on a support, platform, or frame of the movement device 1036. A movement device 1036 may have a frame to hold and support the powder spreader 1030 and/or the energy source 1034.

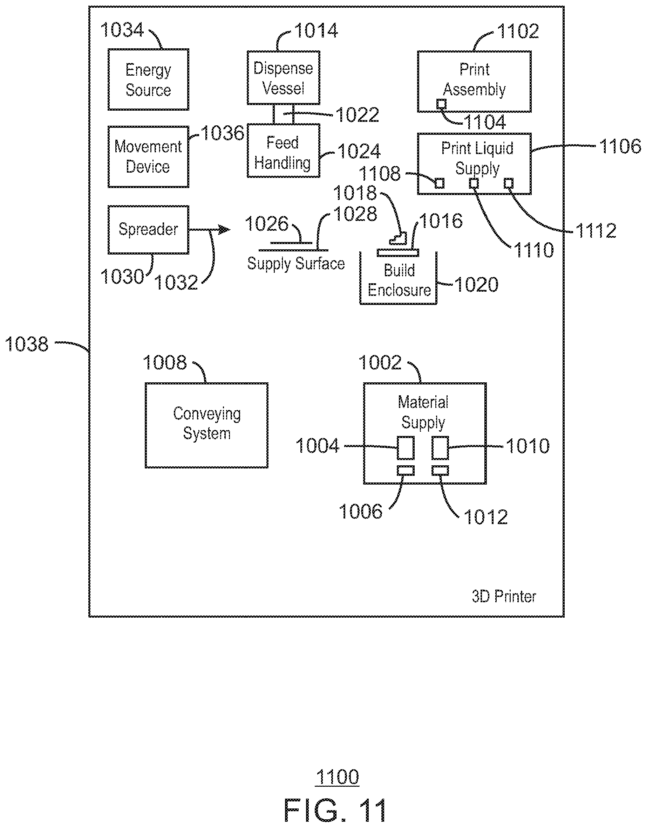

Fig. 11 is a 3D printer 1100 similar to the printer 1000 of Fig. 10 but having a print assembly 1102 for ejecting print liquid onto the build material on the build platform 1016. For instances of the 3D printer 1100 employing print liquid in the solidification of build material into the 3D object, the solidification may involve fusion, binding, curing, and so on, of the build material on the build platform 1016. For example, the fusion may be thermal fusion with the print liquid as a fusing agent or other printing agent. For thermal fusion, the build material may be different materials including polymers, plastics, metals, ceramics, and so on. In one example with thermal fusion, the build material includes polyamide or Nylon. In some examples, the fusing agent accelerates or increases the absorption of energy from an energy source into the build material. In other examples, the fusing agent may react with the build material. As for binding of build material to form the 3D object, the build material may include, for example, gypsum powder, calcium sulfate dihydrate, or similar materials. Thus, the print liquid may include, for instance, a printing agent to bind the gypsum powder or similar powder to generate the 3D object on the build platform. Examples of curing as the solidification may include, for example, UV curing of selected portions of each layer of the build material applied to the build platform.

In all, the 3D printer 1100 may sinter, melt, fuse, bind, or cure build material to form the 3D object 1018. For each successive layer of build material, the print assembly 1102 may eject print liquid onto selected portions of the build material. The print liquid may include a fusing agent, a curing agent, a binding agent, a detailing agent, a coloring agent, a fusing coloring agent, or any combinations thereof. In some examples, the print assembly 1102 may reside on or interface with one of the movement devices 1036. Indeed, in certain examples, a movement device 1036 under computer control may position the print assembly 1102 over the build material on the build platform 1016. Such that, for instance, the print assembly 1102 can eject print liquid onto selected portions of each successive layer of build material on the build platform 1016.

The print assembly 1102 may include nozzles 1104 to eject the print liquid. The print assembly 1102 may include a printbar or printheads, or other type of print assembly. The print assembly may be a printbar having the print nozzles 1104 to eject the print liquid. The nozzles 1104 may be disposed on dies or printheads, or on other substructures, of the printbar. The number of print nozzles 1104 can be up to hundreds or thousands, or more. The diameter of each nozzle 1104 can be in the tens or hundreds of microns. The ejection of the print liquid through the nozzles 1104 may be via pressure differential, a pump, thermal or heat, heating elements, thermal bubble or bubble jet, piezoelectric, and so on. As mentioned, the print assembly 1102 may eject print liquid onto successive layers of build material applied to the build platform 1016. The print assembly 1102 may eject the print liquid onto selected portions of each layer of the build material under computer control to generate respective layers of the 3D object 1018 being formed. The computer control may be per a model, e.g., 3D model, of the 3D object 1018 to be generated.

The 3D printer 1100 includes an energy source 1034 to apply energy to the build material on the build platform 1016 to form the 3D object 1018 from the build material. The presence of the print liquid ejected onto the selected portions of the build material may increase energy transfer into those portions of the build material such that those portions of build material are selectively solidified or fused. The energy source 1034 may include a light source, infrared light source, near-infrared light source, radiation source, heat source, heat lamps, ultraviolet (UV) light source, and so on. The energy source 1034 in conjunction with the print assembly 1102 may print the 3D object 1018 layer-by-layer from build material on the build platform 1016.

Thus, in some examples, the 3D printer 1100 forms the 3D object 1018 layer-by-layer via thermal fusion of the build material on the build platform 1016. In one example, the build material is a plastic or polymer, such as polyamide. In that example, the formed 3D object 1018 may be a prototype, or a product or product component. In another example, the build material is metal, such as stainless steel. In that example, the formed 3D object 1018 may be a prototype, or a machine part or other metal component that may also be formed, for example, by injection molding. Many other examples are applicable.

As indicated, the print liquid may be printing agents such as fusing agents to promote thermal fusion, detailing agents (e.g., water, etc.) to inhibit fusion, coloring agents, and other compounds. In operation, an internal print-liquid supply system 1106 may receive print liquid from the print liquid cartridge held within the printer 1000. The 3D printer 100 may include the print-liquid supply system 1106 to provide print liquid to the print assembly 1102. Again, the print liquid may include printing agents or other compounds. In certain examples, the print-liquid supply system 1106 may include at least one pump 1108 to provide a motive force for supply of the print liquid to the print assembly 1102. In other examples, a pump 1108 is not employed but instead gravity or other motive force is employed to deliver print liquid to the print assembly 1102.

The print-liquid supply system 1106 may include at least one liquid cartridge receiver 1110 to hold an operationally-removable print-liquid cartridge. The print liquid cartridge may be a container that stores print liquid and is inserted by a user into the liquid cartridge receiver 1110. The liquid cartridge receiver 1110 may be a slot, receptacle, or cavity to receive and secure the print liquid cartridge. The print-liquid supply system 1606 may have multiple liquid-cartridge receivers 1110, such as for respective different print liquids or redundant same print liquids.

In operation, the print-liquid supply system 1106 may receive print liquid from the print liquid cartridge held by the liquid cartridge receiver 1110. Again, the supply system 1106 may deliver the print liquid to the print assembly 1102. Lastly, the print-liquid supply system 1106 may include a reservoir vessel 1112 to hold and facilitate delivery of print liquid. The supply system 1106 may include multiple reservoir vessels 1112. The supply system 1106 may employ a reservoir vessel 1112 in conjunction with a pump 1108 to facilitate delivery of print liquid to the print assembly 1102.

In summary, the printer 1100 may include the print assembly 1102 to eject print liquid onto selected portions of the build material on the build platform 1016 to form the 3D object 1018 layer-by-layer from the build material. The print assembly 1102 may apply print liquid to selected portions of layers of build material applied to the build platform 1016 to form associated layers of the 3D object 1018. The print assembly 1102 may eject print liquid onto selected portions of successive applications or layers of build material on the build platform 1016 to form successive layers of the 3D object 1018. In operation, the 3D printer 1100 may lower the build platform 1016 incrementally as each layer of the 3D object 1018 is formed. As indicated, the print liquid may include fusing agent, detailing agent, coloring agent, ink, colorant, pigment, carrier, dye, thermoplastic, binding agent, curing agent, and so on.

As discussed, the 3D printer 1100 may also have a build enclosure 1020 which may at least partially contain or otherwise be associated with the build platform 1016 on which the 3D printer 1100 forms the 3D object 1018. Moreover, the build enclosure 1020 and the associated build platform 1016 together may constitute a build unit. In certain examples, the build unit may be operationally removable. Indeed, while Fig. 11 depicts a build platform 1016, the printer 1100 may be manufactured and sold without the build platform 1016 (or the build enclosure 1020) in examples with a removable build unit. In other examples, the build unit is not operationally removable.

Furthermore, a build unit processing module may include or involve a build unit including the build enclosure 1020 and the build platform 1016. The build platform 1016 may have holes to allow unsolidified powder to flow through the build platform 1016. In addition, the build unit processing module may include sieves, vibration sources such as a motor with an eccentric or off-center mass, air flow devices, and other components to remove excess build material, e.g., unsolidified powder, from the build platform 1016. The 3D object 1018 disposed on the build platform 1016 may cool at an accelerated rate after the excess material or powder is removed from the build enclosure 1510. In other words, the 3D object 1018 may cool faster with surrounding excess build material removed. In this fashion, the build unit processing module may manage the cooling, e.g., by removing the excess build material. The build unit processing module may provide for discharge of excess material from the build enclosure 1020.

At the conclusion of a print job and after most or all of the excess or unsolidified material or powder is removed from the build enclosure 1020, the build enclosure 1020 may include a 3D object 1018 with partially-solidified powder caked on the outside of the 3D object 1018. In certain examples, this partially-solidified powder may be removed by a bead blaster, a brush, or other tools that may be part of the build unit processing module. Partially-solidified powder may be removed from the build enclosure 1020. Partially-solidified powder may be removed from the 3D object 1018 in the build enclosure 1020 or after the 3D object 1018 has been removed from the build enclosure 1020.

Furthermore, in some examples, the printer 1100 may have a 3D-printed-object recovery zone. Indeed, once some or most of the unsolidified powder has been removed from the 3D object 1018 (and from the build enclosure 1020), the 3D object 1018 may be recovered via the 3D-printed-object recovery zone in those examples. In operation, the build platform 1016 may be manually or automatically lifted, e.g., via an underlying piston, towards the top of the build enclosure 1020 to the recovery zone so that a user may recover the 3D object 1018. In an example, this 3D-printed-object recovery zone may be accessed by a user or machine through a top or side opening of the 3D printer 1100. The opening may be through an outer housing or casing of the 3D printer 1100. In some examples, the zone may be accessed by lifting a lid or a removable top of the 3D printer 1100. In other examples, a door(s) of the 3D printer may be opened to access the zone.

The recovery zone may include tools to remove any remaining free build material or powder from the 3D object 1018 and to clean the build platform 1016. The 3D-printed-object recovery zone may also include containers to store printed 3D objects, a light source to illuminate the zone, and devices to provide air flow to prevent or reduce excess build material from exiting the 3D printer 1100 during recovery of the printed 3D object, and so on.

Lastly, while various example 3D printers and printer components have been discussed with respect to Fig. 10 and Fig. 11, it should be emphasized that the material supply system 1002 and associated controller may be employed in other types of 3D printers. Indeed, the material vessels, feeders, conveying system, and controller to adjust operation of the feeders, applies to other example 3D printers.

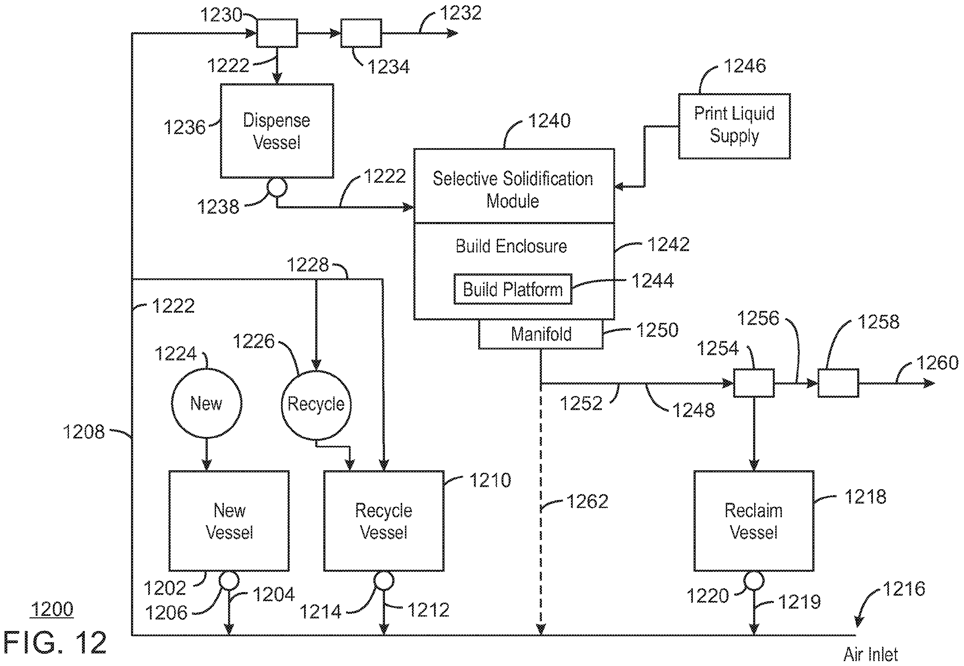

Fig. 12 is a 3D printer 1200 including a new material vessel 1202 that discharges new material 1204 through a feeder 1206 as build material to a pneumatic conveying system 1208. The pneumatic conveying system 1208 is a dilute phase. The dilute phase pneumatic conveying system 1208 may be a negative-pressure system or a positive-pressure system. Further, the printer 1200 includes a recycle material vessel 1210 that discharges recycle material 1212 through a feeder 1214 as build material into the pneumatic conveying system 1208. In the illustrated example, the conveying system 1208 has an air inlet 1216 to intake air as conveying air for transport of the new material 1204 and the recycle material 1212 as build material. The conveying system 1208 may mix in-line the first material 1204 and the recycle material 1212. The printer 1200 may include a reclaim material vessel 1218 that discharges reclaim material 1219 through a feeder 1220 into the pneumatic conveying system 1208. Depending on the particular operation, the reclaim material 1219 may be recycle material or classified as new material, or other material.

The build material 1222 flowing through the conveying system 1208 may be a combination of the new material 1204, recycle material 1212, and reclaim material 1219. The 3D printer 1200 has a computing device, control system, or controller to facilitate the feed build material 1222 composition having a specified ratio of new material to recycle material. The control system may facilitate delivery of a specified ratio, for example, by accommodating metering or regulating of the mass, weight, or volume of material dispensed from the new material vessel 1202 and recycle material vessel 1210. Sensors may be associated with the material vessels 1202, 1210, 1218 and the conveying system 1208 that provide for determinations of material discharge rates from the vessels 1202, 1210, 1218. The computing device or controller may adjust, in response to the determinations, operation of the feeders 1204, 1212, 1220 to maintain a desired amount of build material 1222 and a specified ratio of new material to recycle material in the build material 1222.

The printer 1200 may include a new cartridge receiver 1224 to hold a removable new material cartridge to supply new material to the new material vessel 1202. Likewise, the printer 1200 may have a recycle cartridge receiver 1226 to hold a removable recycle material cartridge to supply recycle material to the recycle vessel 1210. Further, the conveying of build material 1222 may be diverted, as indicated by reference numeral 1228, to the recycle material cartridge or to the recycle material vessel 1210. Such may be implemented, for example, with the material 1222 as reclaim material 1219 and with the reclaim material 1219 as recycle material. During the print job, the conveying system 1208 may transport build material 1222 including new material 1204 and recycle material 1212 (and in some instances, reclaim material 1219) to a separator 1230. Again, the conveying system 1208 may mix in-line the new material 1204 and the recycle material 1212. The separator 1230 (e.g., cyclone, centrifugal separator, etc.) may separate air 1232 from the build material 1222 and discharge the air 1232 through a motive component (e.g., blower) of the conveying system 1208. The separator 1230 may discharge the build material 1222 to a dispense vessel 1238. The dispense vessel 1238 may discharge the build material 1222 through a feeder 1238 and feed handling system for a selective solidification module 1240, build enclosure 1242, and build platform 1244. The feed handling system may include, for example, a feed dosing apparatus for a build-material applicator or powder spreader to distribute the feed build material 1222 across the build platform 1244.

The selective solidification module 1240 may include an energy source to apply energy to the build material on the build platform 1244 to form a 3D object. In examples in which a print liquid is employed, such as for binding, curing, or thermal fusion, the selective solidification module 1240 may include a print assembly (e.g., having a printbar with nozzles) to eject print liquid onto selected portions of build material on the build platform 1244. The 3D printer 1200 may include an internal print-liquid supply system 1246 to provide print liquid to the print assembly, if employed. In some examples, the print liquid may include fusing agents to encourage fusing of the build material. In one example, a fusing agent absorbs near infrared (IR) light to promote melting or fusing of the build material. The fusing agents may be tailored to absorb energy such as light to promote heating and fusing of the build material on the build platform 1244. The fusing agents may include a vehicle or carrier to hold particles that absorb light or radiation. The print liquid may also include detailing agents which inhibit fusing of the build material on the build platform 1244. The print liquid may include coloring agents including for colors such as black, cyan, magenta, yellow, and so forth. The print liquid as coloring agents may be applied for cosmetic reasons and other reasons. The print liquid may also be generally clear or low tint. The print liquid may include pigmented inks, specially-formulated inks, and so on. The print liquid may also be binding agents or curing agents, and the like. Again, however, the 3D printer 1200 may not employ print liquid but instead the printer 1200 or selective solidification module 1240 may sinter the build material via a laser, melt the build material via an electron beam, fuse the build material via a thermal printhead, and so on.

The printer 1200 may include a second conveying system 1248 (e.g., vacuum, pneumatic, etc.) having a manifold 1250 to withdraw excess build material or excess powder, e.g., powder not becoming part of a 3D object, from the build enclosure 1242 as recovered material 1252. In examples, such is performed after generation of the 3D object is complete. In another example, such withdrawal of excess build material is performed both during the print job and after completion of the print job. The recovered material 1252 may enter a separation system 1254 in which conveying air 1254 is withdrawn through a motive component 1258 (e.g., a blower, vacuum pump, etc.), as indicated by reference numeral 1260. The separation system 1254 may also include a filter, sieve, screen, and the like, to remove larger or partially-agglomerated particles from the recovered material 1252. The separation system 1254 may discharge the treated recovered material 1252 as reclaim material 1219 into the reclaim vessel 1218. In certain examples, the recovered material 1252 may bypass the reclaim vessel 1218, as indicated by reference numeral 1262. If so, a feeder may be employed on the bypass 1262.

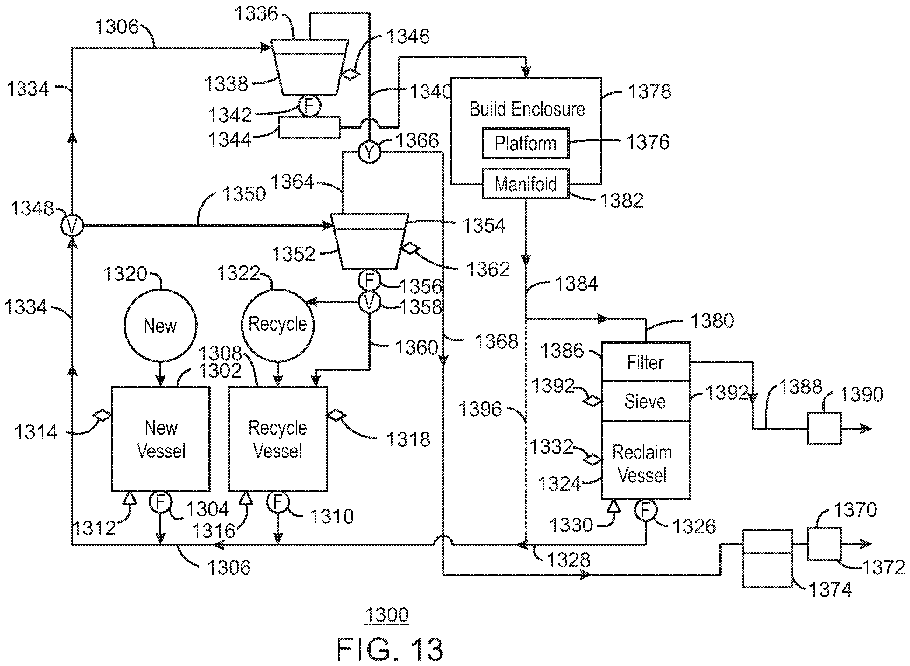

Fig. 13 is a 3D printer 1300 having a new material vessel 1302 that discharges new material through a feeder 1304, such as a rotary feeder, auger, or screw feeder, into a first conveying system 1306 which is a pneumatic conveying system. The feeder 1304 may drop the new material into a conduit of the conveying system 1306. The feeder 606 may meter or regulate material discharge or otherwise facilitate dispensing of the desired amount of new material from the new material vessel 1302 into the first conveying system 1306. In addition, the printer 1300 includes a recycle material vessel 1308 that discharges recycle material through a feeder 1310 into the first conveying system 1306.

The new material vessel 1302 may have a weight sensor 1312 and a level sensor 1314. Likewise, the recycle material vessel 1308 may have a weight sensor 1316 and a level sensor 1318. A controller of the printer 1300 may adjust operation of the feeders 1304, 1310 in response to indications of material discharge amount or rate provided via the weight sensors 1312, 1316. The controller may adjust operation (e.g., rpm) of the feeders 1304, 1310 to maintain a desired ratio of new material to recycle material.

The 3D printer 1300 may include new cartridge receiver 1320 to hold a removable new material cartridge. The new cartridge receiver 1320 may make available new material from the new material cartridge as build material. The new material vessel 1302 may receive new material from the new material cartridge held by the new cartridge receiver 1320. The 3D printer 1300 may include a recycle cartridge receiver 1322 to hold a removable recycle material cartridge. The recycle material cartridge, when installed or inserted into the receiver 1322, may receive excess build material as recycle material and make recycle material available as build material. The recycle material vessel 1308 may receive recycle material from the recycle material cartridge held by the recycle material receiver 1322.

The printer 1300 may include a reclaim material vessel 1324 which discharges reclaim material 1328 through a feeder 1326 into the first conveying system 1306. The reclaim vessel 1328 may have a weight sensor 1330 and a level sensor 1332. The build material 1334 may include reclaim material from the reclaim material vessel 1328 in addition to the recycle material from the recycle material vessel 1308 and new material from the new material vessel 1302.

Conveying air may flow through the first conveying system 1306. An air intake such as a filtered manifold or an open conduit as a "lung" may receive, pull in, and/or filter air (e.g., ambient air) as conveying air for the first conveying system 1306, and also for the second conveying system discussed below. The first conveying system 1306 may transport the build material 1334, e.g., a mix of new material and recycle material from the vessels 1302 and 1308, respectively. In some instances, the build material 1334 may also include reclaim material 1328. In the illustrated example, the first conveying system 1306 may convey the build material 1334 to a separator 1336 associated with a dispense vessel 1338. The dispense vessel 1338 may be a feed hopper. The separator 1336 may include a cyclone, filter, and so forth. The separator 1336 may separate conveying air 1340 from the build material 1334. The build material 1334 minus most or all of the conveying fluid 1346 may flow into the dispense vessel 1338. A feeder 1342 may receive build material from the feed or dispense vessel 1338 and discharge the build material to a powder handling system 1344 for the 3D printing. The dispense vessel 1338 may have a level sensor 1346 and other sensors. The level sensor 1346 may measure and indicate the level or height of build material in the dispense vessel 1338.

The first conveying system 1306 may divert build material 1334 via a diverter valve 1348, as indicated by reference number 1350, to an alternate vessel 1352 or hopper through a separator 1354 such as cyclone, filter, etc. The alternate vessel 1352 may discharge the build material 1334 through a feeder 1356 and diverter valve 1358 to either the recycle material cartage or the recycle material vessel 1308. This diversion of build material 1334 as recycle material 1360 may occur, for instance, when the build material 1334 is primarily recycle material or reclaim material 614 and with the desire to fill a recycle material cartridge or the recycle material vessel 1308. Moreover, as with other material vessels, the alternate vessel 1352 may have a level sensor 1362.

The separator 1354 associated with the alternate vessel 1352 may remove conveying air 1364 from the build material 1334. The build material 1334 minus most or all of the conveying air 1364 may discharge from the separator 1354 into the alternate vessel 1352. In the illustrated example, the conveying air 1364 from the separator 1354 may flow to a Y-fitting 1366, where the conveying air 1364 is combined with the conveying air 1340 from the separator 1336 associated with the dispense vessel 1338. A Y-fitting 1366 may be a conduit fitting having two inlets and one outlet. The combined conveying air 1368 may be pulled from the Y-fitting 1366 by a motive component 1370 of the first conveying system 1306 and discharged 1372 to the environment or to additional equipment for further processing. In some examples, the combined conveying air 1364 may flow through a filter 1374 in route to the motive component 1370.

The motive component 1370 applies motive force for the conveying air in the first conveying system 1306 to transport build material. The motive component 1370 may be an air blower, eductor, ejector, vacuum pump, or other motive component. Because the first conveying system 608 is generally a pneumatic conveying system, the motive component may typically include a blower such as a centrifugal blower, fan, axial blower, and the like.

As for the 3D printing, as mentioned, the dispense vessel 1338 may discharge the build material 1334 through a feeder 1342 to a powder handling system 1344. The feeder 1342 and the powder handling system 1344 may provide a desired amount and layers of build material 1334 across the build platform 1376. The powder handling system 1344 may include a feed apparatus, dosing device, build-material applicator, or powder spreader, and the like, to apply the build material to the build platform 1376 at the build enclosure 1378. The printer 1300 may form a 3D object from build material 1334 on the build platform 1376.

After the 3D object is complete or substantially complete on the build platform 1376, a second conveying system 1380 having a vacuum manifold 1382 may remove excess build material from the build enclosure 1378 as recovered material 1384. Alternatively, the second conveying system 1380 is not so employed. For example, the excess build material may be off-loaded with the 3D object or removed by a stand-alone vacuum.

If employed, the second conveying system 1380 may convey the recovered material 1384 through a cyclone or filter 1386 to separate the recovered material 1384 from the conveying air 1388. The conveying air 1388 is discharged through a motive component 1390 of the second conveying system 1380. The motive component 1390 may be a blower, fan, eductor, ejector, vacuum pump, or other type of motive component. In this example, the recovered material 1384 may discharge from the filter 1386 and enter a sieve 1392 where larger particles (e.g., solidified build material not incorporated into the 3D object) may be removed. The sieve 1392 may have a level sensor 1394 which monitors the level or height of solid material in the sieve 1392. The recovered build material 1384 minus the larger particles may enter the reclaim vessel 1324 as reclaim material 1328. Moreover, in certain instances, the recovered material 1384 may bypass the separator, sieve, and reclaim material vessel 1324 and flow into a conduit of the first conveying system 1306, as indicated by the dashed line 1396. Lastly, the vessels, conveying systems, and associated equipment of the 3D printer 1300 may include instrumentation such as pressure sensors and temperature sensors, and so forth.

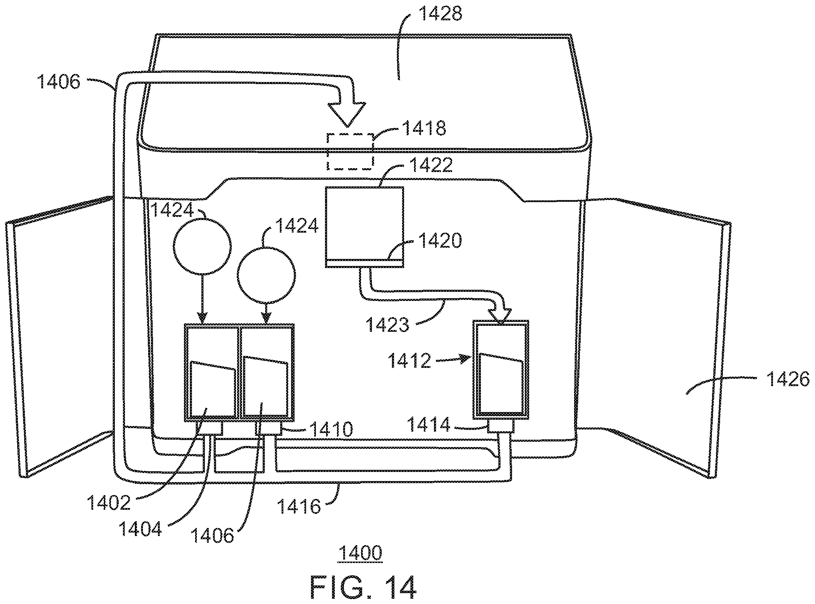

FIG. 14 is a 3D printer 1400 having an internal material vessel 1402 that discharges build material through a feeder 1404 into an internal conveying system 1406. The printer 1400 may include another internal material vessel 1408 to discharge build material through a feeder 1410 to the conveying system 1406. The build material in the first vessel 1402 may be different than the build material in the second vessel 1408. The printer 1400 has a controller to adjust operation of the feeders 1404, 1406 to maintain a composition and discharge rate of the build material for the 3D printing. Further, the printer 1400 may include an additional internal material vessel 1412 to discharge through a feeder 1414 recovered material 1416 as build material into the conveying system 1406. The conveying system 1406 may transport the build material to a dispense vessel 1418 which may supply build material for 3D printing. In the illustrated example, the dispense vessel 1418 is disposed in an upper portion of the printer 1400. Moreover, while the flow arrow of the conveying system 1406 for the feed build material is depicted outside of the 3D printer for clarity, the conveying system 1406 is internal within the housing of the printer 1400.

The 3D printer 1400 may form a 3D object from the build material on a build platform 1420 associated with a build enclosure 1422. Unfused or excess build material 1423 may be recovered from the build enclosure 1422. The excess build material may be treated to give the recovered material 1416. Further, the printer 1400 may include material cartridge receivers 1424 to hold a removable material cartridge inserted by a user. The receiver 1424 may make available build material from the material cartridge for the 3D printing. The internal material vessels 1402, 1408 may receive build material from the material cartridge in the receiver 1424. Moreover, the material vessels 1402, 1408 may be operationally removable. Lastly, in the illustrated example, the 3D printer 1800 has doors or access panels 1426 and a top or lid 1428.

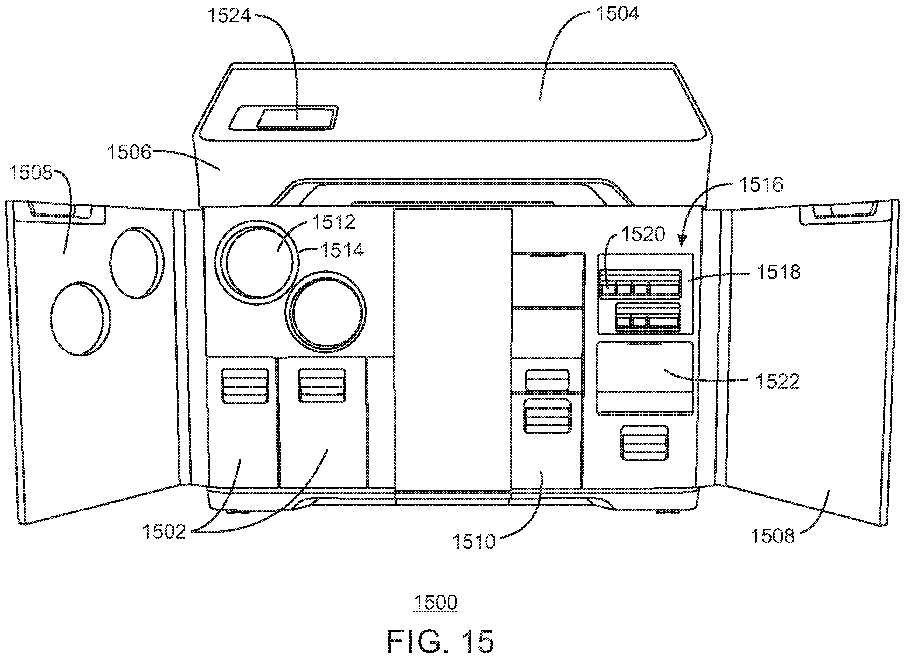

Fig. 15 is a 3D printer 1500 that generates a 3D object from build material on a build platform. The build material may be powder. The printer 1500 has covers or panels over compartments 1502 for respective internal material vessels that supply build material. The material vessels may discharge build material through feeders into an internal conveying system for the 3D printing. The printer 1500 has a controller to adjust operation of the feeders to maintain a desired composition of build material including a specified ratio of materials in the build material. Moreover, in certain examples, the internal material vessels may be operationally removable via user-access to the compartments 1502. The printer 1500 may generally have a housing and with components internal to the housing for handling of build material. The printer 1500 has a top surface 1504, a lid 1506, and doors or access panels 1508. The printer 1500 may include a compartment 1510 for an additional internal material vessel such as a reclaim material vessel that recovers unfused or excess build material from a build enclosure of the printer 1500. The 3D printer 1500 may include a material cartridge receiver 1512 to hold a removable material cartridge 1514. The printer 1500 may have more than one material cartridge receiver 1512. The material cartridge receiver 1512 may make material available from the material cartridge 1514 as build material for the material vessels in compartments 1502. In some examples, the material cartridge receiver 1512 may accept build material into the material cartridge 1514 from the 3D printing, such as from the build enclosure or from the internal reclaim material vessel.

For examples of a 3D printer 1500 that employ a print liquid, the printer 1500 may include print-liquid supply system 1516 to receive and supply print liquid for the 3D printing. The supply system 1516 includes a cartridge receiver assembly 1518 to receive and secure removable print-liquid cartridges 1520. The supply system 1516 may include a reservoir assembly 1522 having multiple vessels or reservoirs for holding print liquid collected from the print liquid cartridges 1520 inserted into the cartridge receiver assembly 1518. The vessels may provide feed capacity or surge capacity of the print liquid. The print liquid may be provided from the vessels or reservoirs to the 3D printing such as to a print assembly or printbar above a build enclosure and build platform.

Lastly, in the illustrated example, the printer 1500 includes a user control panel or interface 1524 associated with a computing system or controller of the printer 1500. The control interface 1524 and computing system or controller may provide for control functions of the printer 1500. Moreover, the fabrication of the 3D object in the 3D printing may be under computer control. A model and automated control may facilitate the layered manufacturing and additive fabrication. The model may be, for example, a computer aided design (CAD) model, a similar model, or other electronic data source. The computer system may have a hardware processor and memory. The hardware processor may be a microprocessor, CPU, ASIC, printer control card, or other circuitry. The memory may include volatile memory and non-volatile memory. The computer system or controller may include firmware or code, e.g., instructions, logic, etc., stored in the memory and executed by the processor to direct operation of the printer 1500 and to facilitate various techniques discussed herein.

In summary, an example includes a 3D printer that forms a 3D object from build material such as powder. The printer has an internal first material vessel to discharge first material through a first feeder as build material; an internal second material vessel to discharge second material through a second feeder as build material; and a controller that adjusts operation of the first feeder and the second feeder to maintain the build material as having a specified ratio of the first material to the second material. The controller may adjust the operation of the first feeder and the second feeder in response to, or based on, indication of material discharge rate of the first material vessel and the second material vessel. In some examples, a first sensor associated with the first material vessel provides the indication of material discharge rate from the first material vessel. A second sensor associated with the second material vessel may provide the indication of material discharge rate from the second material vessel. The example 3D printer may include an internal conveying system to transport build material including the first material and the second material. The first material vessel and the second material vessel may discharge the first material and the second material, respectively, into the conveying system. If so, a sensor associated with the internal conveying system may provide the indication of material discharge rate of the first material vessel and the second material vessel. In certain examples, the conveying system mixes in-line the first material and the second material. Furthermore, the 3D printer may include a feed vessel or dispense vessel to make available build material for the 3D printer to form the 3D object. If so, the internal conveying system to transport build material. to the dispense vessel contemporaneous with the 3D printer forming the 3D object.

While the present techniques may be susceptible to various modifications and alternative forms, the examples discussed above have been shown by way of example. It is to be understood that the techniques are not intended to be limited to the particular examples disclosed herein. The present techniques being solely limited by the scope of the appended claims.

## Claims

1. A three-dimensional (3D) printer comprising:
a first material vessel (202, 302) configured to discharge first material through a first feeder (204, 304) as build material;
a second material vessel (208, 308) configured to discharge second material through a second feeder (210, 310) as build material;
a dilute-phase pneumatic conveying system (206, 306) configured to receive the first and second materials discharged from the first and second material vessels, and to mix the first and second materials in-line; and
a controller (218, 326) configured to adjust operation of the first feeder (204, 304) and the second feeder (210, 310) to maintain the build material as having a specified ratio of the first material to the second material, wherein the 3D printer (200, 300) is to form a 3D object from the build material.

2. The 3D printer of claim 1, comprising the controller configured to adjust the operation of the first feeder (204, 304) and the second feeder (210, 310) based on indication of material discharge rate of the first material vessel (202, 302) and the second material vessel (202, 308).

3. The 3D printer of claim 2, comprising:
a first sensor associated (212) with the first material vessel (202) to provide the indication of material discharge rate from the first material vessel; and/or
a second sensor associated (214) with the second material vessel (202) to provide the indication of material discharge rate from the second material vessel.

4. The 3D printer of claim 1, comprising a sensor (216) associated with the conveying system (206) to provide the indication of material discharge rate of the first material vessel (202) and the second material vessel (208).

5. The 3D printer of claim 1, comprising a dispense vessel (328) to make available build material for the 3D printer (300) to form the 3D object.

6. The 3D printer of claim 5, wherein the conveying system (306) is configured to transport build material to the dispense vessel (328) contemporaneous with the 3D printer (300) forming the 3D object, wherein the first material vessel (302) and the second material vessel (308) is configured to discharge the first material and the second material, respectively, into the conveying system.

7. The 3D printer of claim 3, wherein the controller (326) is configured to adjust, in response to the indication, a first operating parameter of the first feeder (304) and a second operating parameter of the second feeder (310) to maintain a specified ratio of the first material to the second material.

8. The 3D printer of claim 7, wherein the first operating parameter and the second operating parameter each comprise revolutions per minute (rpm).

9. The 3D printer of claim 1, comprising a sensor (216) to provide indication of material discharge rate from the first material vessel or the second material vessel, or both, wherein the sensor comprises a sensor associated with the conveying system (206) to provide the indication of the combined material discharge rate from the first material vessel and the second material vessel, wherein the first material comprises new material, and wherein the second material comprises recycle material.

10. A method of operating a three-dimensional (3D) printer,
comprising: forming a 3D object from build material (502);
discharging first material from a first material vessel through a first feeder into a conveying system (504);
discharging second material from a second material vessel through a second feeder into a conveying system, wherein the first material vessel, the second material vessel, and the conveying system are internal within the 3D printer (506); and
transporting build material comprising the first material and the second material during the forming of the 3D object, the build material comprising a specified ratio of first material to second material (508)
wherein transporting build material comprises using a dilute-phase pneumatic conveying system configured to mix in-line the first and second materials.

11. The method of claim 10, comprising:
determining, via a first sensor associated with the first material vessel, a first discharge rate of the first material from the first material vessel (602);
determining, via a second sensor associated with the second material vessel, a second discharge rate of second material from the second material vessel (604); and
adjusting, via a controller, operation of the first feeder and the second feeder to maintain the specified ratio in response to the first discharge rate or the second discharge rate, or both (610).

12. The method of claim 10, comprising:
supplying build material from a feed vessel for the forming of the 3D object (612),; and determining, via a sensor associated with the conveying system, at least one of a first discharge rate of the first material from the first material vessel, a second discharge rate of second material from the second material vessel, or a combined discharge rate of the first discharge rate and the second discharge rate (608).

## Patentansprüche

1. Dreidimensionaler (3D) Drucker, der Folgendes umfasst:
einen ersten Materialbehälter (202, 302), der dazu konfiguriert ist, ein erstes Material durch eine erste Zuführeinrichtung (204, 304) als Baumaterial abzugeben;
einen zweiten Materialbehälter (208, 308), der dazu konfiguriert ist, ein zweites Material durch eine zweite Zuführeinrichtung (210, 310) als Baumaterial abzugeben;
ein verdünnt-phasiges pneumatisches Fördersystem (206, 306), das dazu konfiguriert ist, das erste und das zweite Material aufzunehmen, die aus dem ersten und dem zweiten Materialbehälter abgegeben werden, und um das erste und das zweite Material inline zu mischen; und
einen Controller (218, 326), der dazu konfiguriert ist, den Betrieb der ersten Zuführeinrichtung (204, 304) und der zweiten Zuführeinrichtung (210, 310) einzustellen, um das Baumaterial, wie ein spezifizierten Verhältnis des ersten Materials zu dem zweiten Material aufweisend, beizubehalten, wobei der 3D-Drucker (200, 300) dazu dient, ein 3D-Objekt aus dem Baumaterial auszubilden.

2. 3D-Drucker nach Anspruch 1, der den Controller, der dazu konfiguriert ist, den Betrieb der ersten Zuführeinrichtung (204, 304) und der zweiten Zuführeinrichtung (210, 310) auf der Basis einer Bezeichnung für eine Materialabgaberate des ersten Materialbehälters (202, 302) und des zweiten Materialbehälters (202, 308) einzustellen, umfasst.

3. Verfahren nach Anspruch 2, das Folgendes umfasst:
einen ersten Sensor, der mit dem ersten Materialbehälter (202) verknüpft (212) ist, um die Bezeichnung für eine Materialabgaberate aus dem ersten Materialbehälter bereitzustellen; und/oder
einen zweiten Sensor, der mit dem zweiten Materialbehälter (202) verknüpft (214) ist, um die Bezeichnung für eine Materialabgaberate aus dem ersten Materialbehälter bereitzustellen.

4. 3D-Drucker nach Anspruch 1, der einen Sensor (216), der mit dem Fördersystem (206) verknüpft ist, umfasst, um die Bezeichnung für eine Materialabgaberate des ersten Materialbehälters (202) und des zweiten Materialbehälters (208) bereitzustellen.

5. 3D-Drucker nach Anspruch 1, der einen Spenderbehälter (328) umfasst, um Baumaterial für den 3D-Drucker (300) bereitzustellen, um das 3D-Objekt auszubilden.

6. 3D-Drucker nach Anspruch 5, wobei das Fördersystem (306) dazu konfiguriert ist, Baumaterial zu dem Spenderbehälter (328) zu transportieren, zeitgleich mit dem 3D-Drucker (300), der das 3D-Objekt ausbildet, wobei der erste Materialbehälter (302) und der zweite Materialbehälter (308) dazu konfiguriert sind, das erste Material beziehungsweise das zweite Material in das Fördersystem abzugeben.

7. 3D-Drucker nach Anspruch 3, wobei der Controller (326) dazu konfiguriert ist, als Reaktion auf die Bezeichnung, einen ersten Betriebsparameter der ersten Zuführeinrichtung (304) und einen zweiten Betriebsparameter der zweiten Zuführeinrichtung (310) einzustellen, um ein spezifiziertes Verhältnis des ersten Materials zu dem zweiten Material beizubehalten.

8. 3D-Drucker nach Anspruch 7, wobei der erste Betriebsparameter und der zweite Betriebsparameter jeweils Umdrehungen pro minute (U/min) umfassen.

9. 3D-Drucker nach Anspruch 1, der einen Sensor (216) umfasst, um eine Bezeichnung für eine Materialabgaberate aus dem ersten Materialbehälter oder dem zweiten Materialbehälter oder beiden bereitzustellen, wobei der Sensor einen Sensor umfasst, der mit dem Fördersystem (206) verknüpft ist, um die Bezeichnung für die kombinierte Materialabgaberate aus dem ersten Materialbehälter und dem zweiten Materialbehälter bereitzustellen, wobei das erste Material ein neues Material umfasst, und wobei das zweite Material ein wiederverwertetes Material umfasst.

10. Verfahren zum Betreiben eines dreidimensionalen (3D) Druckers, das Folgendes umfasst: Ausbilden eines 3D-Objekts aus Baumaterial (502);
Abgeben des ersten Materials aus einem ersten Materialbehälter durch eine erste Zuführeinrichtung in ein Fördersystem (504);
Abgeben des zweiten Materials aus einem zweiten Materialbehälter durch eine zweite Zuführeinrichtung in ein Fördersystem, wobei der erste Materialbehälter, der zweite Materialbehälter und das Fördersystem innerhalb des 3D-Druckers (506) intern sind; und
Transportieren von Baumaterial, das das erste Material und das zweite Material während des Formens des 3D-Objekts umfasst, wobei das Baumaterial ein spezifiziertes Verhältnis von erstem Material zu zweitem Material (508) umfasst,
wobei ein Transportieren von Baumaterial ein Verwenden eines verdünntphasigen pneumatischen Fördersystems umfasst, das dazu konfiguriert ist, das erste und das zweite Material inline zu mischen.

11. Verfahren nach Anspruch 10, das Folgendes umfasst:
Bestimmen, über einen ersten Sensor, der mit dem ersten Materialbehälter verknüpft ist, einer ersten Abgaberate des ersten Materials aus dem ersten Materialbehälter (602);
Bestimmen, über einen zweiten Sensor, der mit dem zweiten Materialbehälter verknüpft ist, einer zweiten Abgaberate des zweiten Materials aus dem zweiten Materialbehälter (604); und
Einstellen, über einen Controller, eines Betriebs der ersten Zuführeinrichtung und der zweiten Zuführeinrichtung, um das spezifizierte Verhältnis als Reaktion auf die erste Abgaberate oder die zweite Abgaberate oder beide (610) beizubehalten.

12. Verfahren nach Anspruch 10, das Folgendes umfasst:
Liefern von Baumaterial aus einem Zuführbehälter für ein Ausbilden des 3D-Objekts (612); und Bestimmen, über einen Sensor, der mit dem Fördersystem verknüpft ist, mindestens eines von einer ersten Abgaberate des ersten Materials aus dem ersten Materialbehälter, einer zweiten Abgaberate des zweiten Materials aus dem zweiten Materialbehälter oder einer kombinierten Abgaberate der ersten Abgaberate und der zweiten Abgaberate (608).

## Revendications

1. Imprimante tridimensionnelle (3D) comprenant :
un premier récipient de matériau (202, 302) conçu pour décharger un premier matériau à travers un premier dispositif d'alimentation (204, 304) en tant que matériau de construction ;
un second récipient de matériau (208, 308) conçu pour décharger un second matériau à travers un second dispositif d'alimentation (210, 310) en tant que matériau de construction ;
un système de transport pneumatique en phase diluée (206, 306) configuré pour recevoir les premier et second matériaux déchargés des premier et second récipient de matériau, et pour mélanger les premier et second matériaux dans la ligne ; et
un dispositif de commande (218, 326) configuré pour régler le fonctionnement du premier dispositif d'alimentation (204, 304) et du second dispositif d'alimentation (210, 310) afin de maintenir le matériau de construction comme ayant un rapport spécifié du premier matériau au second matériau, l'imprimante 3D (200, 300) devant former un objet 3D à partir du matériau de construction.

2. Imprimante 3D selon la revendication 1, comprenant le dispositif de commande configuré pour régler le fonctionnement du premier dispositif d'alimentation (204, 304) et du second dispositif d'alimentation (210, 310) sur la base d'une indication de débit de décharge de matériau du premier récipient de matériau (202, 302) et du second récipient de matériau (202, 308).

3. Imprimante tridimensionnelle selon la revendication 2, comprenant :
un premier capteur associé (212) au premier récipient de matériau (202) pour fournir l'indication de débit de décharge de matériau à partir du premier récipient de matériau ; et/ou
un second capteur associé (214) au second récipient de matériau (202) pour fournir l'indication de débit de décharge de matériau à partir du second récipient de matériau.

4. Imprimante 3D selon la revendication 1, comprenant un capteur (216) associé au système de transport (206) pour fournir l'indication de débit de décharge de matériau du premier récipient de matériau (202) et du second récipient de matériau (208).

5. Imprimante 3D selon la revendication 1, comprenant un récipient de distribution (328) pour créer un matériau de construction disponible pour l'imprimante 3D (300) afin de former l'objet 3D.

6. Imprimante 3D selon la revendication 5, dans laquelle le système de transport (306) est configuré pour transporter un matériau de construction vers le récipient de distribution (328) simultanément à l'imprimante 3D (300) formant l'objet 3D, le premier récipient de matériau (302) et le second récipient de matériau (308) étant conçus pour décharger le premier matériau et le second matériau, respectivement, dans le système de transport.

7. Imprimante 3D selon la revendication 3, dans laquelle le dispositif de commande (326) est configuré pour régler, en réponse à l'indication, un premier paramètre de fonctionnement du premier dispositif d'alimentation (304) et un second paramètre de fonctionnement du second dispositif d'alimentation (310) pour maintenir un rapport spécifié du premier matériau au second matériau.

8. Imprimante 3D selon la revendication 7, dans laquelle le premier paramètre de fonctionnement et le second paramètre de fonctionnement comprennent chacun des tours par minute (tr/min).

9. Imprimante 3D selon la revendication 1, comprenant un capteur (216) pour fournir une indication de débit de décharge de matériau à partir du premier récipient de matériau ou du second récipient de matériau, ou les deux, le capteur comprenant un capteur associé au système de transport (206) pour fournir l'indication du taux de décharge de matériau combiné à partir du premier récipient de matériau et du second récipient de matériau, le premier matériau comprenant un nouveau matériau, et le second matériau comprenant un matériau de recyclage.

10. Procédé de fonctionnement d'une imprimante tridimensionnelle (3D), comprenant : la formation d'un objet 3D à partir d'un matériau de construction (502) ;
la décharge du premier matériau d'un premier récipient de matériau à travers un premier dispositif d'alimentation dans un système de transport (504) ;
la décharge du second matériau d'un second récipient de matériau à travers un second dispositif d'alimentation dans un système de transport, le premier récipient de matériau, le second récipient de matériau et le système de transport étant internes à l'intérieur de l'imprimante 3D (506) ; et
le transport de matériau de construction comprenant le premier matériau et le second matériau pendant la formation de l'objet 3D, le matériau de construction comprenant un rapport spécifié du premier matériau au second matériau (508) ;
le transport de matériau de construction comprenant l'utilisation d'un système de transport pneumatique en phase diluée configuré pour mélanger en ligne les premier et second matériaux.

11. Procédé selon la revendication 10, comprenant :
la détermination, par l'intermédiaire d'un premier capteur associé au premier récipient de matériau, d'un premier taux de décharge du premier matériau à partir du premier récipient de matériau (602) ;
la détermination, par l'intermédiaire d'un second capteur associé au second récipient de matériau, d'une seconde vitesse de décharge du second matériau du second récipient de matériau (604) ; et
le réglage, par l'intermédiaire d'un dispositif de commande, du fonctionnement du premier dispositif d'alimentation et du second dispositif d'alimentation pour maintenir le rapport spécifié en réponse à la première vitesse de décharge ou à la seconde vitesse de décharge, ou les deux à la fois (610).

12. Procédé selon la revendication 10, comprenant :
la fourniture d'un matériau de construction à partir d'un récipient d'alimentation pour la formation de l'objet 3D (612), et la détermination, par l'intermédiaire d'un capteur associé au système de transport, d'une première vitesse de décharge du premier matériau à partir du premier récipient de matériau, d'une seconde vitesse de décharge du second matériau provenant du second récipient de matériau, ou d'une vitesse de décharge combinée de la première vitesse de décharge et de la seconde vitesse de décharge (608).
